# EUROPÄISCHE PATENTSCHRIFT

(11) **EP 0 887 217 B1**
(45) Veröffentlichungstag und Bekanntmachung des Hinweises auf die Patenterteilung: **30.03.2005**
(21) Anmeldenummer: 98111880.5
(22) Anmeldetag: 26.06.1998
(51) Int. Cl.: B60J 7/22

(54) **Windstop-Einrichtung**
Windstop device
Système réflecteur de vent

(30) Priorität: 26.06.1997 DE 19727206; 13.08.1997 DE 19735158
(43) Veröffentlichungstag der Anmeldung: 30.12.1998
(73) Patentinhaber: ORIS FAHRZEUGTEILE HANS RIEHLE GmbH, 71696 Möglingen (DE)
(72) Erfinder: Riehle, Hans, 71638 Ludwigsburg (DE); Kleb, Emmerich, 71606 Markgröningen (DE)
(74) Vertreter: HOEGER, STELLRECHT & PARTNER Patentanwälte

(56) Entgegenhaltungen:
- DE-A- 4 119 529
- DE-U- 9 206 644

## Beschreibung

Die Erfindung betrifft eine Windstop-Einrichtung für ein Cabriofahrzeug, umfassend Windstop-Flächenelemente, welche in einem Bereich hinter Vordersitzen des Cabriofahrzeugs positionierbar sind, Halter zum Halten der Windstop-Flächenelemente in ihrer wirksamen Stellung, welche am Cabriofahrzeug montierbar sind, wobei die Halter relativ zum Cabriofahrzeug derart gelagert sind, daß in einer Einsatzposition der Halter die Windstop-Flächenelemente in der wirksamen Stellung stehen und in einer Verstauposition die Halter mit den Windstop-Flächenelementen in einem im Cabriofahrzeug angeordneten Verstauraum verstaut sind.

Derartige Windstop-Einrichtungen sind aus der DE 41 19 529 A1 bekannt. Bei diesen bekannten Windstop-Einrichtungen sind um eine in Fahrtrichtung verlaufende Achse schwenkbare Überrollbügel vorgesehen, wobei ein flächiges Material an den in Wirkstellung äußeren Rahmenabschnitt der schwenkbaren Überrollbügel befestigt ist, so daß in der eingefahrenen Stellung der Überrollbügel das flächige Material lose unterhalb einer Brüstungslinie der Fahrzeugkarosserie durchhängt und bei ausgefahrenen Überrollbügel von diesen aufgespannt wird.

Diese Windstop-Einrichtungen dienen dazu, dann, wenn die Windstop-Flächenelemente in einem Bereich hinter den Vordersitzen des Cabriofahrzeuges positioniert sind, den Windzug im Bereich der Vordersitze, welcher durch den Fahrtwind bei einem fahrenden Cabriofahrzeug hervorgerufen wird, zu reduzieren. Dies bewirkt eine Reduzierung der durch den Windzug hervorgerufenen Fahrgeräusche und für Fahrer und Beifahrer des Cabriofahrzeuges eine geringere Fahrtwindbeaufschlagung.

Der Erfindung liegt die Aufgabe zugrunde, eine Windstop-Einrichtung mit den eingangs genannten Merkmalen derart zu verbessern, daß sie einen hohen Bedienungskomfort aufweist.

Dies wird bei der Windstop-Einrichtung mit den eingangs genannten Merkmalen erfindungsgemäß dadurch gelöst, daß Schwenkachsen der Halter jeweils schräg zu der Fahrzeuglängsrichtung und schräg zur Fahrzeugquerrichtung orientiert sind.

Die erfindungsgemäße Windstop-Einrichtung weist einen hohen Bedienungskomfort auf, da sie, wenn sie in ihrer Funktion als Windstop nicht benötigt wird, nicht demontiert werden muß, sondern sich die Halter mit den Windstop-Flächenelementen in dem Verstauraum durch eine entsprechende Bewegung der Halter verstauen lassen. Dadurch ist beim Nichteinsatz in der Verstauposition eine sichere Aufbewahrung erreicht und ohne viel Aufwand läßt sich die Einsatzposition durch eine entsprechende Bewegung der Halter erreichen, ohne daß die Windstop-Flächenelemente neu montiert werden müssen. Die erfindungsgemäße Windstop-Einrichtung läßt sich dadurch durch einige wenige Handgriffe oder durch Betätigung von einem entsprechenden Schalter aus der Einsatzposition in die Verstauposition und aus der Verstauposition in die Einsatzposition bringen. Insbesondere ist es erreichbar, daß die Halter und Windstop-Flächenelemente der erfindungsgemäßen Windstop-Einrichtung in der Verstauposition von außen im wesentlichen nicht sichtbar sind.

Der geringe Platzbedarf für den Verstauraum ist insbesondere dadurch erreichbar, daß Schwenkachsen für die Halter schräg zu einer durch eine Fahrzeuglängsrichtung und einer Fahrzeugquerrichtung aufgespannten Ebene orientiert sind. Auf diese Weise lassen sich die Halter mit den Windstop-Flächenelementen in der Verstauposition gut in dem Verstauraum verstauen und in der Einsatzposition ist durch eine ent prechende Ausbildung der Halter eine optimale Windschutzfunktion erreichbar. Bei der Windstop-Einrichtung nach der Erfindung ist eine solche Lösung ist insbesondere vorteilhaft für ein Viersitzer-Cabriofahrzeug.

Die erfindungsgemäße Windstop-Einrichtung ist insbesondere vorteilhaft für Viersitzer-Cabriofahrzeuge. Um eine gute Windstop-Funktion zu erreichen, muß bei diesem Typ von Fahrzeug mindestens ein Teilbereich oberhalb von Rücksitzen dieses Cabriofahrzeuges abgedeckt werden. Damit sind die Rücksitze zur Personenbeförderung nicht nutzbar. Falls die Rücksitze benötigt werden, lassen sich die Halter mit den Windstop-Flächen ohne viel Aufwand in dem Verstauraum verstauen, um die Rücksitze nutzbar zu machen.

Nach einer Ausführungsform der Erfindung ist ein geringer Platzbedarf für den Verstauraum erforderlich, da die Schwenkachsen für die Halter schräg zu einer durch eine Fahrzeuglängsrichtung und einer Fahrzeugquerrichtung aufgespannten Ebene orientiert sind. Auf diese Weise lassen sich die Halter mit den Windstop-Flächenelementen in der Verstauposition gut in dem Verstauraum verstauen und in der Einsatzposition ist durch eine entsprechende Ausbildung der Halter eine optimale Windschutzfunktion erreichbar. Eine solche erfindungsgemäße Lösung ist insbesondere vorteilhaft für ein Viersitzer-Cabriofahrzeug.

Konstruktiv besonders vorteilhaft ist es, wenn die Halter relativ zum Verstauraum schwenkbar sind. Dadurch ist es ermöglicht, die Windstop-Flächenelemente in der Einsatzposition so anzuordnen, daß eine gute Schutzfunktion gegenüber Windzug erreicht ist und andererseits eine kompakte Verstauung in der Verstauposition im Verstauraum erreichbar ist. Dadurch läßt sich der Verstauraum klein halten, so daß er einen geringen Platzbedarf am Cabriofahrzeug aufweist.

Besonders vorteilhaft ist es dabei, wenn die Schwenkachsen außerdem noch jeweils schräg zu einer vertikalen Richtung orientiert sind. Die Schwenkachsen sind damit jeweils schräg zu den ausgezeichneten Fahrzeug- bzw. Raumrichtungen. Dies ermöglicht ein Vorbeischwenken an entsprechenden Cabriofahrzeugteilen, die sonst eventuell die Schwenkbewegung behindern könnten.

Besonders günstig ist es, wenn ein Schwenkachsenvektor der Schwenkachsen, dessen Projektion auf die vertikale Richtung parallel zu dieser ist, in Richtung eines Fahrzeuginnenraums bezogen auf die Fahrzeugquerrichtung und in Richtung eines hinteren Fahrzeugendes bezogen auf die Fahrzeuglängsrichtung orientiert ist. Bei dieser Wahl der Orientierung sind die Schwenkachsen ins Fahrzeuginnere nach hinten gerichtet. Eine solche Orientierung ermöglicht es, die Halter mit den Windstop-Flächenelementen mit geringem Platzbedarf in dem Verstauraum zu verstauen und in der Einsatzposition für ihre Windschutzfunktion effektiv und einen großen Flächenbereich umfassend zu positionieren.

Bei einer konstruktiv besonders günstigen Variante einer Ausführungsform umfaßt die erfindungsgemäße Windstop-Einrichtung Schwenklager zur Lagerung der Halter, welche an dem Cabriofahrzeug innerhalb des Verstauraums montiert sind. Auf diese Weise nehmen die Schwenklager keinen Raum außerhalb des Verstauraums ein und sind somit von außen bei geschlossenem Verstauraum im wesentlichen nicht sichtbar. Es ist dadurch erreichbar, daß in der Verstauposition die Halter mit den Windstop-Flächenelementen im wesentlichen nicht sichtbar sind.

Bei einer besonders vorteilhaften Variante eines Ausführungsbeispieles umfaßt die Windstop-Einrichtung einen ersten äußeren Halter, welcher in einem ersten Schwenklager gelagert ist, und einen zweiten äußeren Halter, welcher in einem zweiten Schwenklager gelagert ist, wobei jeweilige Verlängerungslinien einer ersten Schwenkachse des ersten äußeren Halters und einer zweiten Schwenkachse des zweiten äußeren Halters einen Schnittpunkt aufweisen. Dadurch ist erreicht, daß die Halter sich auf platzsparende Weise in der Verstauposition in dem Verstauraum verstauen lassen, die Halter relativ zueinander in die Einsatzposition ausschwenkbar sind und sich dabei die Windstop-Flächenelemente in ihrer Windschutzfunktion ausbilden und insbesondere ausfalten lassen.

Bei einer Variante einer Ausführungsform ist es vorgesehen, daß der Schnittpunkt innerhalb einer Mittenebene des Cabriofahrzeuges, welche senkrecht zur Fahrzeugquerrichtung ist, liegt. Dies bedeutet, daß das erste Schwenklager und das zweite Schwenklager im wesentlichen symmetrisch zu dieser Mittenebene angeordnet sind.

Bei einer günstigen Variante ist es vorgesehen, daß der Schnittpunkt gegenüber einer Mittenebene des Cabriofahrzeuges, welche senkrecht zur Fahrzeugquerrichtung ist, versetzt ist. Dies bedeutet, daß die erste Schwenkachse und die zweite Schwenkachse bezogen auf die Fahrzeugquerrichtung etwas gegeneinander versetzt sind. Der erste äußere Halter und der zweite äußere Halter weisen dann in der Verstauposition eine Versetzung gegeneinander auf, die eine bessere Verstauwirkung für das Material, das die Windstop-Flächenelemente bildet, bereitstellt, da dann ein größerer Raumbereich für dieses Material und insbesondere für eine Faltung dieses Materials bereitgestellt ist.

Insbesondere bei all den Cabriofahrzeugen, bei welchen hinter den Vordersitzen noch eine Ablage oder eine zweite Sitzbank vorhanden ist, ist vorzugsweise vorgesehen, daß jeder Halter ein Windschott-Haltebügelelement und ein Abdeckungs-Haltebügelelement aufweist, das heißt, daß die Halter einerseits mit ihren Windschott-Haltebügelelementen den Teil der Windstop-Flächenelemente halten, welcher ein sich in einer quer zur Fahrzeuglängsrichtung verlaufenden Ebene erstreckendes Windschott bilden und außerdem mit den Abdeckungs-Haltebügelelementen diejenigen Teile des Windstop-Flächenelements halten, welche eine Abdeckung für einen Ablageraum hinter der vorderen Sitzreihe oder einen hinter dieser angeordneten Rücksitz bilden.

In diesem Fall kann vorgesehen sein, daß in der Verstauposition die Halter als Ganzes, das heißt mit einem starr relativ zum Abdeckungs-Haltebügelelement angeordneten Windschott-Haltebügelelement in dem Verstauraum aufgenommen sind. In diesem Fall ist jedoch ein relativ großer Verstauraum für die Halter erforderlich, da diese zwei im Winkel zueinander angeordnete Haltebügelelemente aufweisen.

Eine besonders günstige und insbesondere hinsichtlich des benötigten Verstauraums bevorzugte Lösung sieht vor, daß das Windschott-Haltebügelelemente relativ zum Abdeckungs-Haltebügelelement von einer aktiven Stellung in eine inaktive Stellung und umgekehrt bewegbar ist. Der Vorteil dieser Lösung ist darin zu sehen, daß durch die Bewegbarkeit des Windschott-Haltebügelelements relativ zum Abdeckungs-Haltebügelelement der Raumbedarf für die Verstauposition geringer gehalten werden kann.

Besonders günstig ist bei einer Ausführungsform der erfindungsgemäßen Windstop-Einrichtung, wenn das Windschott-Haltebügelelement in der aktiven Stellung in seiner die Windstop-Flächenelemente in der wirksamen Stellung haltenden Stellung steht und in der inaktiven Stellung in einer nahe dem Abdeckungs-Haltebügelelement liegenden Stellung. Damit ist der Raumbedarf für die erfindungsgemäßen Halter in der inaktiven Stellung erheblich reduziert.

Besonders günstig ist der Verstauraum dann, wenn das Windschott-Haltebügelelement in seiner inaktiven Stellung ungefähr parallel zum Abdeckungs-Haltebügelelement ausgerichtet ist.

Im Zusammenhang mit der erfindungsgemäßen Erläuterung der einzelnen Ausführungsbeispiele wurden keine näheren Angaben zur Stellung des Windschott-Haltebügelelements im Verhältnis zur Einsatzposition und Verstauposition der Halter gemacht. Eine besonders günstige Lösung sieht vor, daß das Windschott-Haltebügelelement in der Einsatzposition der Halter in der aktiven Stellung steht und in der Verstauposition der Halter in der inaktiven Stellung. Dadurch ist bereits von vornherein sichergestellt, daß der Verstauraum für die Halter möglichst klein gehalten werden kann.

Prinzipiell wäre es denkbar, die Bewegung des Windschott-Haltebügelelements relativ zum Abdeckungs-Haltebügelelement unabhängig von der Bewegbarkeit des gesamten Halters relativ zum Kraftfahrzeug möglich zu machen. Eine besonders günstige Lösung sieht jedoch vor, daß das Windschott-Haltebügelelement mit der Bewegung der Halter von der Verstauposition in die Einsatzpositionen koordiniert von der inaktiven Stellung in die aktive Stellung bewegbar ist, wobei vorzugsweise eine derartige koordinierte Bewegung auch in umgekehrter Richtung erfolgt.

Mit dieser Lösung läßt sich in besonders einfacher Weise sicherstellen, daß einerseits in der Einsatzposition das Windschott-Haltebügelelement in der aktiven Stellung steht und andererseits in der Verstauposition die inaktive Stellung vorliegt und somit Kollisionen mit den Verstauraum umschließenden Wänden vermieden werden können.

Prinzipiell wäre es im Rahmen der erfindungsgemäßen Lösung denkbar, die Bewegung des Windschott-Haltebügelelements relativ zum Abdeckungs-Haltebügelelement stets dann durchzuführen, wenn das Abdeckungs-Haltebügelelement bereits in der Einsatzposition steht. Dies würde sich jedoch insbesondere negativ auf die Zeiträume auswirken, die erforderlich sind, um die erfindungsgemäße Windstop-Einrichtung von der Verstauposition in die Einsatzposition zu bringen, in welcher die Windstop-Flächenelemente in ihrer wirksamen Stellung stehen.

Aus diesem Grund sieht eine vorteilhafte Lösung vor, daß das Windschott-Haltebügelelement während der Bewegung der Halter von der Verstauposition in die Einsatzposition von der inaktiven Stellung in die aktive Stellung bewegbar ist, wobei dies auch insbesondere für den umgekehrten Vorgang gilt.

Der Vorteil dieser Lösung ist der, daß somit bei Abschluß der jeweiligen Bewegung gleichzeitig mit der Einsatzposition oder der Verstauposition die aktive Stellung oder die inaktive Stellung der Windschott-Haltebügelelemente erreicht ist.

Eine besonders günstige Lösung sieht vor, daß jedes Windschott-Haltebügelelement relativ zum Abdeckungs-Haltebügelelement zwangsgesteuert mit der Bewegung der Halter bewegbar ist. Damit ist in einfacher Weise sichergestellt, daß die Windschott-Haltebügelelemente in der Einsatzposition und in der Verstauposition die jeweils gewünschte Stellung einnehmen.

Dabei wäre es denkbar, für die Bewegung der Windschott-Haltebügelelemente einen eigenen Antrieb vorzusehen. Dies ist jedoch vielfach aufwendig und im übrigen ist es erforderlich, in diesem Fall, diesen eigenen, für die Windschott-Haltebügelelemente vorgesehenen Antrieb mit dem Antrieb für die Halter zu koordinieren oder gar zu synchronisieren.

Aus diesem Grund sieht eine besonders günstige Lösung vor, daß die Bewegung des Windschott-Haltebügelelements mechanisch mit der Bewegung der Halter gekoppelt ist.

Prinzipiell wäre es denkbar, die Bewegung der Windschott-Haltebügelelemente relativ zu den Abdeckungs-Haltebügelelemente beispielsweise über biegsame Wellen anzutreiben, über welche eine Drehbewegung der Halter mit der Bewegung der Windschott-Haltebügelelemente koppelbar wäre. Eine mechanisch besonders stabile robuste und insbesondere auch günstig herzustellende Lösung sieht vor, daß die Bewegung des Windschott-Haltebügelelements durch ein Zugelement mechanisch mit der Bewegung der Halter gekoppelt ist.

Da ein derartiges Zugelement durch eine Zugbewegung die Bewegung des Windschott-Haltebügelelements relativ zum Abdeckungs-Haltebügelelement steuert, ist es erforderlich, um stets eine definierte Endposition des Windschott-Haltebügelelements relativ zum Abdeckungs-Haltebügelelement zu erhalten, die Zugbewegung relativ präzise zu dimensionieren.

Um jedoch Längenveränderungen oder auch sich auf die Zugwirkung auswirkende Toleranzveränderungen kompensieren zu können, ist vorzugsweise vorgesehen, daß das Zugelement einen in Zugrichtung wirksamen elastischen Kraftspeicher aufweist. Dieser elastische Kraftspeicher dient dann zum Ausgleich möglicherweise auftretender Toleranzen und erlaubt eine Längendehnung des Zugelements, um beispielsweise eine Relativbewegung gegen einen Anschlag durchführen zu können.

Ferner besteht bei Einsatz eines Zugelements auch stets das Problem, daß dieses im nicht wirksamen, das heißt, entspannten Zustand dann mit einem freien Abschnitt schlaff durchhängen würde und somit die Möglichkeit besteht, daß sich das Zugelement in anderen Elementen verfängt. Aus diesem Grund ist vorzugsweise vorgesehen, daß ein freier Abschnitt des Zugelements im entspannten Zustand in einer vorgegebenen Richtung elastisch gehalten ist, damit besteht die Möglichkeit, mit einem beispielsweise quer zur Zugrichtung des Zugelements wirksamen elastischen Element auch im entspannten Zustand des Zugelements dieses definiert zu halten und somit auch ein Verfangen desselben mit anderen Elementen zu verhindern.

Bei einer Variante einer Ausführungsform der erfindungsgemäßen Windstop-Einrichtung ist es vorgesehen, daß die Schwenkachsen in einem kleinen spitzen Winkel zur Fahrzeuglängsrichtung orientiert sind. Diese Variante läßt sich insbesondere einsetzen für ein Zweisitzer-Cabriofahrzeug.

Um ein raumsparendes Verstauen zu ermöglichen ist es zweckmäßig, wenn ein erstes Schwenklager, in welchem ein erster äußerer Halter gelagert ist, bezogen auf eine Fahrzeuglängsrichtung versetzt gegen ein zweites Schwenklager, in welchem ein zweiter äußerer Halter gelagert ist, angeordnet ist. Dadurch sind die Halter zueinander bezogen auf die Fahrzeuglängsrichtung versetzt, so daß das Material für die Windstop-Flächenelemente, welche zwischen dem ersten äußeren Halter und dem zweiten äußeren Halter gehalten ist, auf einfache Weise ausfaltbar in der Verstauposition angeordnet ist.

Besonders vorteilhaft lassen sich bei einem derartigen Ausführungsbeispiel, bei welchem die Halter um eine ungefähr parallel zur Fahrzeuglängsrichtung verlaufende Achse schwenkbar sind, die Halter dann platzsparend verstauen, wenn diese in der Verstauposition sich quer zur Fahrzeuglängsrichtung, jedoch ungefähr parallel zur Fahrzeugquerrichtung erstrecken.

Bisher wurde keine Aussage gemacht über die Ausbildung der Halter. Es ist vorteilhaft, wenn die Halter so ausgebildet sind, daß in der Einsatzposition Windstop-Flächenelemente im wesentlichen parallel zur Fahrzeugquerrichtung in einem Winkel zur durch die Fahrzeuglängsrichtung und die Fahrzeugquerrichtung aufgespannten Ebene orientiert sind. Eine derartige Orientierung liefert eine gute Windzugschutzfunktion der Windstop-Flächenelemente.

Dabei ist es günstig, wenn der Winkel gemessen im Gegenuhrzeigersinn gegenüber der durch die Fahrzeuglängsrichtung und die Fahrzeugquerrichtung aufgespannten Ebene größer oder gleich 90° und kleiner als ca. 180° ist. Dadurch lassen sich die Windstop-Flächenelemente insbesondere in einer Neigung zu den Vordersitzen des Cabriofahrzeuges positionieren, um so eine gute Windzugschutzfunktion zu erreichen.

Besonders günstig ist dabei, wenn die Halter so ausgebildet sind, daß in der Einsatzposition Windstop-Flächenelemente von einem an einem den Vordersitzen zugewandten Ende des Halters liegenden Bereich bis zu einem Bereich des Verstauraumes angeordnet sind. Dadurch treten keine Windlöcher auf, die die Schutzfunktion gegen Windzug beeinträchtigen könnten.

Besonders vorteilhaft ist es, wenn das Material für die Windstop-Flächenelemente ein faltbares vorzugsweise biegeschlaffes Material ist. Dadurch ist eine gute Verstaubarkeit erreicht, wobei sich der Verstauraum mit einem kleinen Volumen ausbilden läßt. Außerdem wird dadurch die Bewegung und insbesondere Schwenkbewegung der Halter nicht zu stark eingeschränkt.

Für die Windzugschutzfunktion ist es günstig, wenn das Material für die Windstop-Flächenelemente eine bedingte Winddurchlässigkeit aufweist. Dies kann beispielsweise erreicht werden, wenn das Material für die Windstop-Flächenelemente eine Netzstruktur aufweist.

Bei einer weiteren Ausführungsform der Erfindung ist vorgesehen, daß die Windstop-Einrichtung Spannmittel aufweist, welche beim Herausbewegen der Halter aus dem Verstauraum und Positionieren in der Einsatzposition ein Aufspannen der Windstop-Flächenelemente, insbesondere in der Richtung, in der sich die Halter erstrecken, bewirken. Dies hat den Vorteil, daß das Volumen des Verstauraumes klein ausgebildet werden kann, und in der Einsatzposition eine gute Windzugschutzfunktion der Windstop-Flächenelemente sichergestellt ist.

Vorzugsweise trägt mindestens ein Element der Spannmittel eine Oberkante der Windstop-Flächenelemente.

Das Spannmittel zum Aufspannen der Windstop-Flächenelemente kann in unterschiedlichster Art und Weise ausgebildet sein.

Im einfachsten Fall wäre es beispielsweise denkbar, das Spannmittel als Strang aus biegeschlaffem Material auszubilden, das durch das Positionieren der Halter in der Einsatzposition gestrafft wird und die Windstop-Flächenelemente aufspannt. Ein derartiges Spannmittel hat jedoch den Nachteil, daß beim Verbringen der Halter in den Verstauraum die Windstop-Flächenelemente nicht zwangsläufig mit den Haltern in den Verstauraum hineinbewegt werden.

Aus diesem Grund sieht eine vorteilhafte Ausbildung der erfindungsgemäßen Lösung vor, daß die Spannmittel ein sich bei abnehmendem Abstand zwischen dessen halterseitigen Enden durch Formänderung in Richtung quer zu einer Verbindungslinie zwischen den halterseitigen Enden ausdehnendes Querspreizelement umfassen.

Ein derartiges Querspreizelement läßt sich einerseits als Spannmittel zum Aufspannen der Windstop-Flächenelemente einsetzen, andererseits aber auch dazu, die Windstop-Flächenelemente beim Bewegen der Halter in den Verstauraum so "mitzunehmen", daß ein zwangsläufiges Verbringen der Windstop-Flächenelemente in den Verstauraum erfolgt. Dies ist dadurch bedingt, daß das Querspreizelement sich quer zu seiner Verbindungslinie zwischen den halterseitigen Elementen ausdehnen kann und durch dieses Ausdehnen in Richtung quer zur Verbindungslinie ein zusätzliches Aufnehmen von Teilen der Windstop-Flächenelemente durch das Querspreizelement erfolgt, so daß insgesamt dann die Windstop-Flächenelemente mit dem Querspreizelement gezielt in den Verstauraum geführt werden können.

Das Querspreizelement kann in unterschiedlichster Art und Weise ausgeführt sein.

Beispielsweise kann das Querspreizelement so ausgeführt sein, daß dieses sich symmetrisch zur Verbindungslinie quer zu derselben ausdehnt.

Eine besonders einfach zu realisierende Ausführungsform des Querspreizelements sieht vor, daß dieses sich durch Bildung von quer zur Verbindungslinie verlaufenden Ausbiegungen quer zur Verbindungslinie ausdehnt.

Ein derartiges Ausdehnen des Querspreizelements ist in unterschiedlichsten Formen realisierbar. Eine Form wäre die, daß das Querspreizelement als Ausbiegungen mehrere Bögen bildet.

Diese Bögen könnten einerseits dadurch gebildet sein, daß das Querspreizelement mäanderähnliche Bögen bildet. Eine andere Lösung wäre die, daß das Querspreizelement wendelartige Bögen bildet.

Hinsichtlich des Materials des Querspreizelements wurden bislang noch keine nähere Angaben gemacht. Besonders günstig ist es, wenn das Querspreizelement aus einem formflexiblen, nichtschlaffen Material ist.

Ein derartiges formflexibles, jedoch nichtschlaffes Material wäre beispielsweise ein vorgeformtes Draht- oder Federstahlmaterial oder auch entsprechend vorgeformtes Kunststoffmaterial, wobei dieses Material jeweils noch eine gewisse Eigensteifigkeit aufweist, die jedoch der Formflexibilität nicht im Wege steht.

Besonders günstig ist es, wenn das Querspreizelement aus einem Strangmaterial gebildet ist, welches von einer quer zur Verbindungslinie der Enden ausgedehnten Form durch Vergrößern des Abstands der Enden in eine gestreckte Form mit quer zur Verbindungslinie reduzierter Ausdehnung bringbar ist.

Ein derartiges Querspreizelement könnte beispielsweise durch einen von seiner Grundform her spiralförmig verlaufenden Strang aus Material gebildet sein, das durch Verbringen in seine gestreckte Form die Ausdehnung quer zur Verbindungslinie zwischen den Enden reduziert. Dieses Material könnte sowohl ein mit einer quer zur Verbindungslinie ausgedehnten Grundform versehener Stahldraht oder auch ein Kunststoffdraht oder auch ein Federstahlmaterial sein.

Hinsichtlich der Verbindung des Spannmittels mit den Windstop-Flächenelementen wurden bislang keine näheren Angaben gemacht. Beispielsweise könnte das Spannmittel punktuell mit den Windstop-Flächenelementen verbunden sein. Eine besonders günstige Lösung sieht jedoch vor, daß das Spannmittel in einer schlauchförmigen, mit den Windstop-Flächenelementen verbundenen Tasche zwischen den Haltern verläuft. Eine derartige Verbindung zwischen dem Spannmittel und den Windstop-Flächenelementen läßt sich in einfacher Weise herstellen und hat außerdem den Vorteil, daß bei Ausbildung der Spannmittel als Querspreizelement dieses die nötigen Freiheitsgrade hat, um sich in Querrichtung unter Mitnahme der Windstop-Flächenelemente auszudehnen.

Die Tasche könnte prinzipiell auf die Windstop-Flächenelemente aufgesetzt sein. Eine besonders einfache Lösung sieht vor, daß die Tasche aus dem Material der Windstop-Flächenelemente, beispielsweise durch Herstellung eines Umschlags und Vernähen desselben mit den Windstop-Flächenelementen, gebildet ist.

Hinsichtlich der Fixierung des Spannmittels relativ zu der Tasche wurden bisher keine Näheren Angaben gemacht. Ein besonders günstiges Ausführungsbeispiel sieht dabei vor, daß das Spannmittel lose in der Tasche verläuft.

Um eine möglichst große Materialaufnahme von den Windstop-Flächenelementen bei Querausdehnung des Spannmittels zu erreichen, ist vorzugsweise vorgesehen, daß die Tasche eine zumindest begrenzte Querausdehnung des Spannmittels zuläßt, die einerseits somit eine freie Formänderung des Spannmittels erlaubt und andererseits auch in günstiger Weise eine Aufnahme von Teilen der Windstop-Flächenelemente bei auftretender Querausdehnung.

Bei einer fertigungstechnisch besonders günstigen Variante sind die Spannmittel durch zwischen den Haltern angeordnete flexible Verbindungselemente gebildet, die die Windstop-Flächenelemente in der Einsatzposition spannen. Bei diesen flexiblen Verbindungselementen kann es sich beispielsweise um Seile, flexible Metallbänder oder Bowdenzüge handeln.

Eine besonders günstige Lösung eines flexiblen Spannmittels sieht vor, daß das Spannmittel ein in Richtung einer Verringerung des Abstands zwischen den halterseitigen Enden wirkendes Kontraktionselement aufweist.

Vorzugsweise ist dabei das Kontraktionselement als zugelastischer Strang ausgebildet, welcher beispielsweise durch ein Gummiseil realisiert werden kann.

Es ist aber auch möglich, das Querspreizelement so auszubilden, daß es zusätzlich zwischen den halterseitigen Enden des Spannmittels in Richtung einer Verringerung des Abstandes mit einer Zugkraft wirkt und somit selbst auch das Kontraktionselement darstellt.

Im Hinblick auf das Aufspannen der Windstop-Flächenelemente wurde nur ausgeführt, daß die Spannmittel zum Tragen einer Oberkante der Windstop-Flächenelemente dienen sollen. Ein derartiges Spannmittel kann zwischen den Haltern gespannt werden und somit in gespanntem Zustand eine geradegerichtete Linie bilden.

Um jedoch einen vorteilhaften oberen Abschluß mit einer optisch gefälligen Oberkante der Windstop-Flächenelemente zu erreichen, ist vorzugsweise vorgesehen, daß die Windstop-Flächenelemente als oberen Abschluß einen Kamm tragen. Ein derartiger Kamm soll dabei vorzugsweise eine gewisse Eigensteifigkeit aufweisen und somit die Möglichkeit schaffen, dem oberen Abschluß der Windstop-Flächenelemente eine gewünschte definierte Form zu geben.

So ist beispielsweise vorgesehen, daß der Kamm eine konvex nach oben gewölbte Oberlinie bildet. Eine derartige gewölbte Oberlinie schließt sich optisch günstig an die Gesamtform einer Karosserie ein und bedingt somit ein an die Karosserieform angepaßtes Aussehen der Windstop-Flächenelemente.

Alternativ oder ergänzend hierzu ist es möglich, daß der Kamm eine gezahnte obere Begrenzungslinie aufweist. Eine derartige gezahnte obere Begrenzungslinie, dient insbesondere dazu, Windgeräusche zu vermeiden.

Da ein derartiger Kamm einerseits eine so große Eigensteifigkeit aufweisen soll, um bei aufgespannten Windstop-Flächenelementen die gewünschte Oberlinie zu bilden, ist - wie bereits erwähnt - ein gewisses Maß an Eigensteifigkeit des Kamms erforderlich.

Um jedoch gleichzeitig den Kamm mitsamt den Windstop-Flächenelementen und den Haltern in dem Verstauraum verstauen zu können, ist vorzugsweise vorgesehen, daß der Kamm faltbar ist.

Dabei ist vorzugsweise der Kamm aufgrund seiner Eigensteifigkeit aus einem nichtschlaffen Material hergestellt und somit ist beispielsweise zum Erhalten der Faltbarkeit eines derartigen Materials vorgesehen, daß der Kamm mit vorgegebenen Faltstellen zu versehen ist.

Hinsichtlich der Ausrichtung eines derartigen Kamms in der Einsatzposition der Halter sind die unterschiedlichsten Möglichkeiten denkbar. Besonders günstig ist es dabei, wenn der Kamm durch die Spannmittel ausgerichtet gehalten ist. Die Spannmittel können dabei somit einerseits dazu dienen, die Windstop-Flächenelemente aufzuspannen, und andererseits dazu, den Kamm straff gespannt zwischen den Haltern zu halten, wobei dann der Kamm aufgrund seiner Eigensteifigkeit die gewünschte optische Wirkung erzeugt.

Ein einfacher Einbau der erfindungsgemäßen Windstop-Einrichtung an einem Cabriofahrzeug läßt sich dadurch erreichen, daß der Verstauraum durch einen Innenraum eines Kassettenelementes gebildet ist, welches an dem Cabriofahrzeug montierbar ist. Dadurch können verschiedene Kassettenelementformen für verschiedene Kraftfahrzeugtypen vorgesehen werden, die jeweils auf den speziellen Kraftfahrzeugtyp optimiert sind. Der Einbau der erfindungsgemäßen Windstop-Einrichtung umfaßt dann im wesentlichen den Einbau des Kassettenelementes in das Cabriofahrzeug.

Insbesondere ist es vorteilhaft, wenn Lager für die Bewegung der Halter an dem Kassettenelement montiert sind. Dadurch läßt sich die gesamte Windstop-Einrichtung in das Kassettenelement integrieren und zur Montage der erfindungsgemäßen Windstop-Einrichtung muß nur noch das Kassettenelement in dem Cabriofahrzeug montiert werden.

Bei einer günstigen Variante eines Ausführungsbeispiels weist der Verstauraum eine Abdeckung auf, welche sich öffnen und schließen läßt. Dadurch läßt sich einerseits in der Verstauposition der Verstauraum abdecken, so daß ein Schmutz-, Staub- und Wasserschutz vorhanden ist und andererseits ein ästhetischer Sichtschutz erreicht ist. Durch die Abdeckung läßt sich ebenfalls der Verstauraum abdecken, wenn die Halter mit den Windstop-Flächenelementen in der Einsatzposition sind, um wiederum das Eindringen von Schmutz und Wasser in den Verstauraum zu verhindern und einen Sichtschutz gegenüber dem Verstauraum bereitzustellen.

Bisher wurden keine Aussagen gemacht über die Anordnung des Verstauraumes. Bei einer Variante einer Ausführungsform ist es vorgesehen, daß der Verstauraum hinter Rücksitzen des Cabriofahrzeuges im Cabriofahrzeug angeordnet ist. Diese Variante ist für Viersitzer-Cabriofahrzeuge gedacht. Es kann auch vorgesehen sein, daß der Verstauraum in Rücksitzen des Cabriofahrzeuges integriert ist. Diese Variante hat den Vorteil, daß in der Einsatzposition sich Windlöcher, die die Windzugschutzfunktion verringern könnten, sich auf besonders einfache Weise vermeiden lassen, da eine optimale Anpassung der Windstop-Flächenelemente an die Rücksitze gewährleistet ist.

Bei einem Zweisitzer-Cabriofahrzeug ist es vorteilhaft, wenn der Verstauraum der erfindungsgemäßen Windstop-Einrichtung hinter den Vordersitzen des Cabriofahrzeuges angeordnet ist, um die Positionierung der Windstop-Flächenelemente in der Einsatzposition auf einfache Weise zu ermöglichen.

Bisher wurden keine Aussagen gemacht über die Bewirkung der Schwenkbewegung der Halter. Besonders vorteilhaft ist es, wenn die erfindungsgemäße Windstop-Einrichtung einen Antrieb zum Schwenken der Halter aufweist.

Bei einer Variante einer Ausführungsform ist es vorgesehen, daß einer der Halter durch einen ersten Antrieb und ein anderer der Halter durch einen zweiten Antrieb angetrieben sind. Dadurch sind die Halter unabhängig voneinander bewegbar. Dies stellt eine konstruktiv besonders einfache Ausführungsform dar, da auf eine aufwendige Kopplung verzichtet werden kann.

Vorzugsweise sind die Antriebe Elektromotoren, welche beispielsweise über ein selbsthemmendes Getriebe, z.B. ein Schneckengetriebe, oder über ein Kegelradgetriebe die Halter antreiben.

Es ist dann besonders vorteilhaft, wenn der erste und der zweite Antrieb elektronisch koppelbar sind. Auf diese Weise läßt sich ein synchrones oder auch ungleichmäßiges Ausschwenken aus der Verstauposition in die Einsatzposition und ein synchrones oder auch ungleichmäßiges Einschwenken aus der Einsatzposition in die Verstauposition der Halter erreichen, so daß insbesondere Beschädigungen des Materials der Windstop-Flächenelemente während des Schwenkens vermieden werden können und ein gesteuertes Falten und Entfalten erreichbar ist.

Bei einer besonders günstigen Variante eines Ausführungsbeispieles sind der erste Antrieb für den einen Halter und der zweite Antrieb für den anderen Halter mechanisch gekoppelt. Diese mechanische Kopplung ermöglicht es, die Schwenkbewegung des einen und des anderen Halters mit beispielsweise nur einem Antriebsmotor zu bewirken.

Auf konstruktiv besonders einfache Weise läßt sich die mechanische Kopplung durch eine Hebelgestängevorrichtung bilden, welche ein Gelenkkopplungselement aufweist, das drehbar mit einer fahrzeugfesten Drehachse gelagert ist und wobei eine Drehbewegung des Gelenkkopplungselementes umsetzbar ist auf eine Schwenkbewegung des ersten und des zweiten äußeren Halters. Eine solche der erfindungsgemäßen Windstop-Einrichtung Hebelgestängevorrichtung ermöglicht eine Schwenkbewegung der Halter auf kontrollierte Weise und insbesondere läßt sich die Hebelgestängevorrichtung so ausbilden, daß die Halter einander vorlaufen bzw. nachlaufen, um so das Ausfalten bzw. das Falten des Materials für die Windstop-Flächenelemente zu ermöglichen.

Bei einer konstruktiv besonders einfachen Ausführungsform der erfindungsgemäßen Windstop-Einrichtung ist an das Gelenkkopplungselement ein erstes Gelenkstangenelement angelenkt, welches an ein fahrzeugfest drehbar gelagertes erstes Zahnkranzelement außerhalb dessen Drehachse angelenkt ist, wobei durch das erste Zahnkranzelement der erste Antrieb für den ersten äußeren Halter gebildet ist, und an das Gelenkkopplungselement ist ein zweites Gelenkstangenelement angelenkt, welches an ein fahrzeugfest drehbar gelagertes zweites Zahnkranzelement außerhalb dessen Drehachse angelenkt ist, wobei durch das zweite Zahnkranzelement der zweite Antrieb für den zweiten äußeren Halter gebildet ist. Dadurch läßt sich auf einfache Weise die Drehbewegung des Gelenkkopplungselementes auf die Drehbewegung des ersten Zahnkranzelementes und des zweiten Zahnkranzelementes, das heißt auf zwei Zahnkranzelemente, übertragen.

Um ein gutes Ausfalten des Material für die Windstop-Flächenelemente beim Ausschwenken der Halter aus der Verstauposition in die Einsatzposition oder beim Falten dieses Materials beim Einschwenken aus der Einsatzposition in die Verstauposition zu erreichen, ist es besonders günstig, wenn das erste Gelenkstangenelement bezogen auf den Abstand zwischen entsprechenden Gelenkpunkten kürzer ist als das zweite Gelenkstangenelement. Auf diese Weise läßt sich erreichen, daß sich in der gleichen Zeit das Zahnkranzelement, welches mit dem längeren Gelenkstangenelement verbunden ist, sich um einen größeren Winkel dreht als das entsprechende andere Zahnkranzelement. Dadurch wird derjenige äußere Halter, welcher durch das entsprechende Zahnkranzelement angetrieben ist, das mit dem kürzeren Gelenkstangenelement verbunden ist, gegenüber dem anderen äußeren Halter beim Ausschwenken nachgeführt bzw. beim Einschwenken von der Einsatzposition in die Verstauposition wird der andere äußere Halter nachgeschwenkt. Dies erlaubt es auf einfache Weise, das Material für die Windstop-Flächenelemente, welches zwischen den äußeren Haltern gehalten ist, beim Ausschwenken zu entfalten und beim Einschwenken zu falten, um auf diese Weise für eine optimale platzsparende Unterbringung in dem Verstauraum zu sorgen.

Um einen großen Drehbereich bei konstruktiv geringem Aufwand zu erreichen ist es besonders günstig, wenn in der Verstauposition das erste Gelenkstangenelement im wesentlichen kolinear zur Richtung zwischen Anlenkpunkten des ersten Gelenkstangenelementes und des zweiten Gelenkstangenelementes an dem Gelenkkupplungselement orientiert ist und das zweite Gelenkstangenelement quer zu dieser Richtung orientiert ist.

Auf konstruktiv besonders einfache Weise läßt sich die Drehbewegung der Zahnkranzelemente auf die äußeren Halter dadurch erreichen, daß der erste und der zweite äußere Halter jeweils starr mit einem fahrzeugfest drehbar angeordneten Ritzelelement verbunden sind, welches zur Übertragung der Drehbewegung der ersten und zweiten Zahnkranzelemente auf die jeweiligen Halter dient.

Um einen großen Schwenkbereich für die äußeren Halter zu erreichen, ist es besonders vorteilhaft, wenn ein Abstand (d) zwischen einer Ritzelelementdrehachse und zugehöriger Zahnkranzelementdrehachse kleiner ist als ein Abstand (a) zwischen der Zahnkranzelementdrehachse und einer Gelenkkopplungselementdrehachse des Gelenkkopplungselementes. Auf diese Weise läßt sich erreichen, daß die Schwenkbewegung um die Schwenkachse, welche schräg im Raum liegt, einen Winkel im Bereich von 0 bis 200° umfaßt, wodurch ein vollständiges Ausschwenken und ein Verstauen der Halter ermöglicht ist und diese Schwenkbewegung durch die erfindungsgemäße Hebelgestängevorrichtung entsprechend angetrieben werden kann.

Sämtliche vorstehend beschriebenen mechanisch erreichten Bewegungsabläufe lassen sich aber auch mit einer Steuerung für zwei Antriebe erhalten, wenn diese die Antriebe in entsprechender Weise, beispielsweise ein geeignetes Ablaufprogramm ansteuert.

Bei einer konstruktiv günstigen Variante eines Ausführungsbeispieles ist das Gelenkkopplungselement mittels eines Schneckentriebs drehbar. Ein Schneckentrieb weist ein Selbsthemmung auf, die eine Rasthemmung des Gelenkkopplungselements bewirkt und damit zur Bildung von Raststellungen für die äußeren Halter dienen kann. Der Schneckentrieb selber kann hydraulisch, mechanisch oder elektrisch angetrieben sein.

Besonders günstig ist es, wenn der Antrieb der Halter von einer Fahrgastzelle des Cabriofahrzeuges aus betätigbar ist. Dadurch ist ein hoher Bedienkomfort erreicht.

Für einen hohen Bedienkomfort ist es auch günstig, wenn der Antrieb mit einem Öffnungs- und Schließmechanismus für eine Abdeckung des Verstauraums gekoppelt ist. Dadurch müssen nicht eine Vielzahl von Handgriffen durchgeführt werden, um die Windstop-Flächenelemente in die Einsatzposition zu bringen bzw. um diese in die Verstauposition zu bringen, da durch die Schwenkbewegung der Halter automatisch sich die Abdeckung öffnen läßt und beim Erreichen der Einsatzposition schließen läßt und entsprechend umgekehrt beim Zurückschwenken die Abdeckung sich automatisch öffnen läßt und, wenn die Verstauposition erreicht ist, sich die Abdeckung schließen läßt.

In der Zeichnung zeigen:
- Fig. 1: einen schematischen Längsschnitt eines Cabriofahrzeuges, mit einem ersten Ausführungsbeispiel einer erfindungsgemäßen Windstop-Einrichtung;
- Fig. 2: eine schematische perspektivische Ansicht der erfindungsgemäßen Windstop-Einrichtung ausgehend von einer Karosserierückseite;
- Fig. 3: eine Hinteransicht eines Cabriofahrzeugs mit montierter erfindungsgemäßen Windstop-Einrichtung;
- Fig. 4a, b: eine schematische Darstellung eines Kopplungsantriebs zur Bewegung der Halter bei einem zweiten Ausführungsbeispiel der erfindungsgemäßen Windstop-Einrichtung;
- Fig. 5: einem Längsschnitt ähnlich Fig. 1 durch ein drittes Ausführungsbeispiel einer erfindungsgemäßen Windstop-Einrichtung;
- Fig. 6: eine Draufsicht auf eine Abdeckung für einen Verstauraum bei einem vierten Ausführungsbeispiel;
- Fig. 7: einen Längsschnitt ähnlich Fig. 1 durch ein fünftes Ausführungsbeispiel;
- Fig. 8: eine perspektivische Ansicht ähnlich Fig. 2 des fünften Ausführungsbeispiels;
- Fig. 9: eine Hinteransicht ähnlich Fig. 3 des fünften Ausführungsbeispiels;
- Fig. 10: eine vergrößerte Darstellung eines Halters des fünften Ausführungsbeispiels in Seitenansicht mit Blickrichtung von einer Karosserieinnenseite zu einer Karosserieaußenseite;
- Fig. 11: eine vergrößerte Darstellung eines Halters eines sechsten Ausführungsbeispiels ähnlich Fig. 10 mit Blickrichtung von einer Karosserieaußenseite zu einer Karosserieinnenseite;
- Fig. 12: einen Längsschnitt ähnlich Fig. 1 durch ein siebtes Ausführungsbeispiel einer Windstop-Einrichtung für ein Zweisitzer-Cabriofahrzeug. Jedoch nicht mit Haltern die ent- sprechend Anspruch 1 schwenkbar sind;
- Fig. 13: eine schematische perspektivische Ansicht von in ihrer wirksamen Stellung positionierten Windstop-Flächenelementen des siebten Ausführungsbeispiels bei einem Zweisitzer-Cabriofahrzeug;
- Fig. 14: einen Längsschnitt ähnlich Fig. 1 durch ein achtes Ausführungsbeispiel für eine erfindungsgemäße Windstop-Einrichtung für ein Zweisitzer-Cabriofahrzeug;
- Fig. 15: eine schematische perspektivische Ansicht eines neunten Ausführungsbeispiels einer erfindungsgemäßen Windstop-Einrichtung, gesehen von einer Karosserievorderseite;
- Fig. 16: einen Schnitt längs Linie 16-16 in Fig. 15;
- Fig. 17: eine perspektivische Ansicht ähnlich Fig. 15 beim Bewegen der Windstop-Einrichtung von der Einsatzposition in Richtung einer Verstauposition mit Darstellung einer Formänderung eines Querspreizelements und der Auswirkung auf die Windstop-Flächenelemente;
- Fig. 18: eine schematische Darstellung ähnlich Fig. 15 eines zehnten Ausführungsbeispiels;
- Fig. 19: eine Explosionsdarstellung des zehnten Ausführungsbeispiels gemäß Fig. 18 mit abgenommenem Kamm; und
- Fig. 20: eine Darstellung ähnlich Fig. 17 mit Formänderung des Kamms bedingt durch das Querspreizelement.

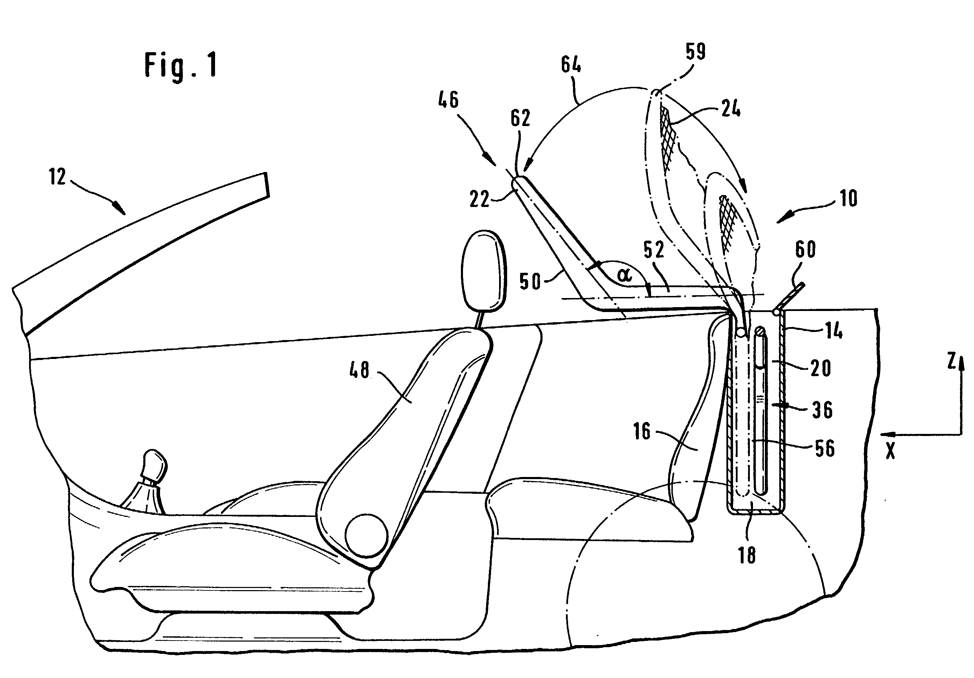

Bei einem ersten Ausführungsbeispiel einer erfindungsgemäßen Windstop-Einrichtung, welche in Fig. 1 als Ganzes mit 10 bezeichnet ist, ist diese an einem Cabriofahrzeug 12 montiert, welches ein Viersitzer ist.

Die erfindungsgemäße Windstop-Einrichtung 10 umfaßt ein Kassettenelement 14, das hinter Rücksitzen 16 des Cabriofahrzeuges 12 montiert ist. Ein Innenraum 18 des Kassettenelementes 14 dient als Verstauraum 20, um Halter 22 und Windstop-Flächenelemente 24 in einer Verstauposition in dem Verstauraum 20 zu verstauen, welche dann aus diesem heraus in eine Einsatzposition bringbar sind.

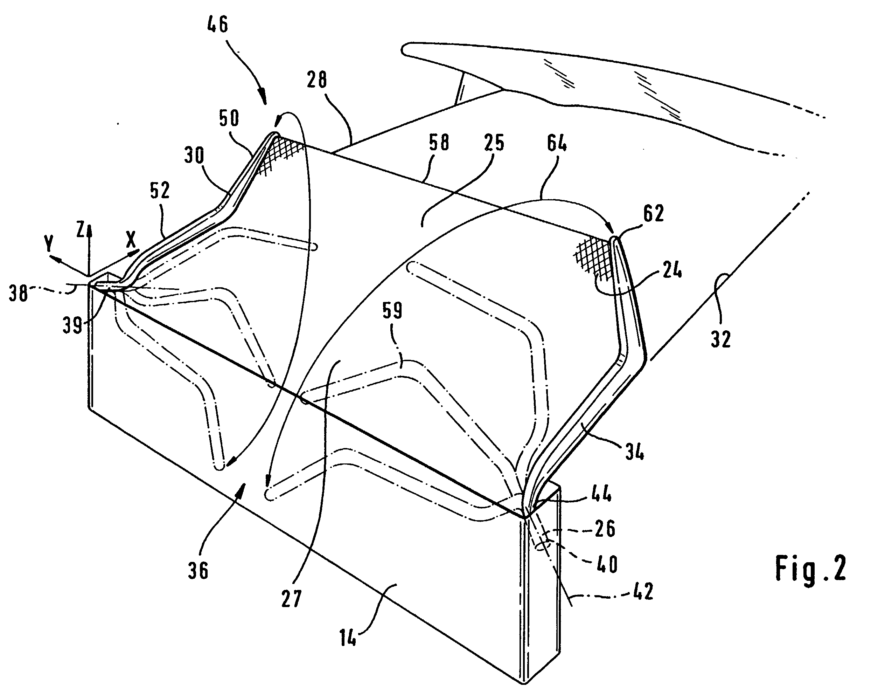

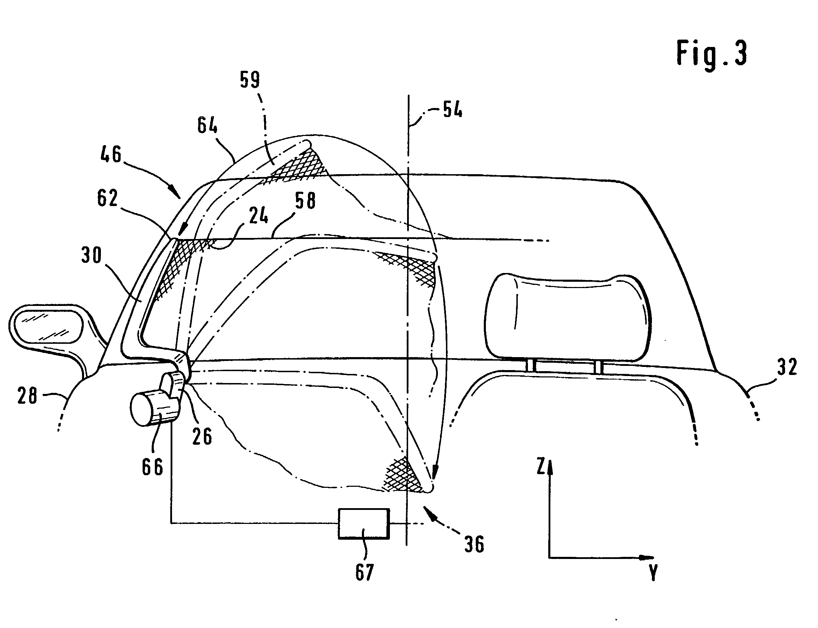

Dazu sind in einem oberen Bereich des Kassettenelementes 14 Schwenklager 26 (Fig. 2, Fig. 3) montiert, die ein Schwenken der als Schwenkhalter 30, 34 ausgebildeten Halter 22 aus dem Verstauraum 20 heraus in die Einsatzposition ermöglichen.

In der Einsatzposition halten die Halter 22 das Windstop-Flächenelement aufgespannt, unter Bildung eines Windschotts 25 und einer Abdeckung 27 für die Rücksitze 16.

Bezogen auf eine Fahrzeuglängsrichtung X ist auf einer linken Fahrzeugseite 28 der erste äußerer Schwenkhalter 30 und auf einer rechten Fahrzeugseite 32 der zweite äußere Schwenkhalter 34 schwenkbar jeweils in einem zugeordneten Schwenklager 26 angeordnet. Durch die Schwenkhalter 30 und 34 sind die Windstop-Flächenelemente 24 gehalten. In der Verstauposition der Schwenkhalter 30 und 34 sind die Windstop-Flächenelemente 24 zwischen dem ersten äußeren Schwenkhalter 30 und dem zweiten äußeren Schwenkhalter 34 so gefaltet, daß sowohl die Schwenkhalter 30 und 34 als auch die Windstop-Flächenelemente 24 zusammen in dem Verstauraum 20 in einer Verstauposition 36 verstaubar sind. Dazu sind bevorzugterweise die Windstop-Flächenelemente 24 aus einem biegeschlaffen Material gefertigt, welches faltbar ist.

Der erste äußere Schwenkhalter 30 weist eine erste Schwenkachse 38 auf, die in einem ersten Schwenklager 39 gelagert ist und die schräg zu einer Fahrzeuglängsrichtung X und einer Fahrzeugquerrichtung Y verläuft. Ebenso weist der zweite äußere Schwenkhalter 34, welcher in einem zweiten Schwenklager 40 gelagert ist, eine zweite Schwenkachse 42 auf, welche schräg zu der Fahrzeuglängsrichtung X und der Fahrzeugquerrichtung Y verläuft. Vorzugsweise verlaufen die Schwenkachsen 38 und 42 schräg zu einer durch die Fahrzeuglängsrichtung X und die Fahrzeugquerrichtung Y aufgespannten Ebene, so daß die erste Schwenkachse 38 und die zweite Schwenkachse 42 daher nicht parallel oder senkrecht zu einer der ausgezeichneten Raumrichtungen X oder Y oder zu einer vertikalen Richtung Z liegen.

Die Schwenkhalter 30 und 34 weisen eine nichtebene Bügelform auf. Sie umfassen jeweils ein Bügellagerelement 44, welches in dem zugehörigen ersten bzw. zweiten Schwenklager 39 bzw. 40 gelagert ist. In einer Einsatzposition 46 sind der erste äußere Schwenkhalter 30 und der zweite äußere Schwenkhalter 34 gegenüber dem Verstauraum 20 ausgeschwenkt und bilden hinter Vordersitzen 48 des Cabriofahrzeuges 12 Windschott-Haltebügelelemente 50 für die Windstop-Flächenelemente 24, die dann als Windstop oder zumindest als Fahrtwindbegrenzer für den Fahrtwind bei Bewegung des Cabriofahrzeuges 12 wirken können.

Das den Vordersitzen 48 des Cabriofahrzeuges 12 zugewandte Windschott-Haltebügelelement 50 ist dabei in einem Winkel α bezogen auf die durch die Fahrzeuglängsrichtung X und die Fahrzeugquerrichtung Y aufgespannten Ebene orientiert, wobei dieser Winkel α größer gleich 90° ist und kleiner als 180° und bevorzugterweise größer als 100° und beispielsweise im Bereich von ca. 120° liegt (Fig. 1). Dadurch lassen sich die durch die Windschott-Haltebügelelemente 50 die Schwenkhalter 30 und 34 gehaltenen Flächenelemente im wesentlichen in diesem Winkel hinter den Vordersitzen 48 des Cabriofahrzeuges 12 positionieren.

Weiter umfassen der erste äußere Schwenkhalter 30 und der zweite äußere Schwenkhalter 34 in der Einsatzposition 46 im wesentlichen parallel oder in einem kleinen spitzen Winkel zur Fahrzeuglängsrichtung X orientierte Abdeckungs-Haltebügelelemente 52, durch welche sich die Windstop-Flächenelemente 24 in einen Bereich oberhalb der Rücksïtze 16 des Cabriofahrzeuges 12 positionieren lassen. Dadurch läßt sich in der Einsatzposition ein Bereich oberhalb von Sitzflächen und oberhalb von Rückpolstern abdecken.

Die durch den ersten äußeren Schwenkhalter 30 und den zweiten äußeren Schwenkhalter 34 gehaltenen Windstop-Flächenelemente 24 sind dabei so an diesen Haltern angeordnet, daß sie sich durchgehend von den Windschott-Haltebügelelementen 50 bis in den Bereich des Verstauraums 20 erstrecken, so daß keine Windlöcher in der Einsatzposition 46 vorliegen.

Eine gute Windabschottung oder gute Windzugbegrenzung erhält man dann, wenn das Material für die Windstop-Flächenelemente 24 eine bedingte Winddurchlässigkeit aufweist. Insbesondere ist es bei einer Ausführungsform der Erfindung vorgesehen, daß das Material eine Netzstruktur aufweist. Es ist jedoch auch denkbar, daß ein nichtwinddurchlässiges Material verwendet wird.

Mittels der ersten Schwenkachse 38 läßt sich der erste äußere Schwenkhalter 30 und mittels der Schwenkachse 42 der zweite äußere Halter 34 aus der Verstauposition 36 aus dem Verstauraum 20 in die Einsatzposition 46 zum Einsatz der Windstop-Flächenelemente 24 als Windstop schwenken. Durch die nichtebene Ausbildung der Schwenkhalter 30 bzw. 34 mit dem Lagerungselement 44 und den Haltebügelelementen 50, 52 ist erreicht, daß in der Verstauposition 36 die Haltebügelelemente 50 und 52 im wesentlichen parallel zu einer durch die Fahrzeugquerrichtung Y und durch die vertikale Richtung Z aufgespannten Ebene liegen.

Das Bügellagerungselement 44 weist einen solchen Winkel zum Haltebügelelemente 52 auf, daß sich die zugehörige erste Schwenkachse 38 für den ersten äußeren Schwenkhalter 30 und die zweite Schwenkachse 42 für den zweiten äußeren Schwenkhalter 34 in einem Schnittpunkt (in der Fig. 2 nicht gezeigt) schneiden. Dieser Schnittpunkt liegt dabei in Richtung eines vorderen Endes des Cabriofahrzeuges 12 und oberhalb der Schwenklager 26.

Es kann bei einer Ausführungsform der Erfindung vorgesehen sein, daß das erste Schwenklager 39 und das zweite Schwenklager 40 so angeordnet und ausgebildet sind, daß die erste Schwenkachse 38 und die zweite Schwenkachse 42 spiegelsymmetrisch zu einer Mittenebene 54 des Cabriofahrzeuges 12 angeordnet sind.

Es kann erfindungsgemäß aber auch vorgesehen sein, daß dieser Schnittpunkt gegen die Mittenebene 54 versetzt ist. Dies bedeutet, daß das erste Schwenklager 39 und das zweite Schwenklager 40 gegeneinander bezogen auf die Fahrzeuglängsrichtung X versetzt sind. Dadurch läßt sich erreichen, daß für die Windstop-Flächenelemente 24, die zwischen dem ersten äußeren Schwenkhalter 30 und dem zweiten äußeren Schwenkhalter 34 gehalten sind, eine bessere Verstauungsmöglichkeit in dem Verstauraum 20 ergibt, da in der Verstauposition 36 zwischen dem ersten äußeren Schwenkhalter 30 und dem zweiten äußeren Schwenkhalter 34 bezogen auf die Richtung X ein Zwischenraum 56 (Fig. 1) vorliegt, der die Faltung des Materials für die Windstop-Flächenelemente 24 in der Verstauposition 36 erleichtert.

Es ist bei einer Ausführungsform der Erfindung vorgesehen, daß Spannmittel 58 zwischen dem ersten äußeren Schwenkhalter 30 und dem zweiten äußeren Schwenkhalter 34 angeordnet sind, die beim Ausschwenken der Schwenkhalter 30 und 34 ein Ausfalten der Windstop-Flächenelemente 24 zum Einsatz dieser als Windstop bewirken. Die Spannmittel sind dabei flexibel ausgebildet, um sie zusammen mit den Schwenkhaltern 30 und 34 in dem Verstauraum 20 verstaubar zu machen. Beispielsweise sind als Spannmittel 58 Seile oder Gummibänder oder flexible Metallstreifen oder Bowdenzüge oder Kombinationen von diesen Mitteln vorgesehen, die mit einem Ende jeweils an dem ersten äußeren Schwenkhalter 30 und mit dem anderen Ende jeweils an dem zweiten äußeren Schwenkhalter 34 gehalten sind und die mit dem Material für die Windstop-Flächenelemente 24 verbunden sind, beispielsweise über Verbindungselemente oder beispielsweise in dieses Material eingewebt sind.

Der Verstauraum 20 weist eine Abdeckung 60 (Fig. 1) auf, die sich öffnen und schließen läßt. Bei geschlossener Abdeckung 60 sind die Halter 22 mit den Windstop-Flächenelementen 24, wenn sie im Verstauraum 20 verstaut sind, von außen nicht erkennbar.

Die erfindungsgemäße Windstop-Einrichtung funktioniert wie folgt:

In der Verstauposition 36 sind die Halter 22 in dem Verstauraum 20 versenkt und die Abdeckung 60 ist geschlossen. Zum Ausschwenken in die Einsatzposition 46 wird die Abdeckung 60 geöffnet, die Schwenkhalter 30 und 34 werden ausgeschwenkt, bis die Einsatzposition 46 erreicht ist. Dabei entfalten sich die Windstop-Flächenelemente 24 und werden durch die Spannmittel 58 gespannt, so daß hinter den Vordersitzen 48 des Cabriofahrzeuges 12 eine effektive Windstop-Anordnung bereitgestellt ist. Die Abdeckung 60 wird dann geschlossen.

Um die Halter 22 mit den Windstop-Flächenelementen 24 wieder in dem Verstauraum 20 zu verstauen, werden die Halter 22 zurückgeschwenkt. Dabei falten sich die Windstop-Flächenelemente 24 zusammen. In der Verstauposition 36 wird dann die Abdeckung 60 wieder geschlossen.

Ein Ende 62 der Schwenkhalter 30, 34 beschreibt dabei bei der Schwenkbewegung aus der Verstauposition 36 in die Einsatzposition 46 bzw. aus der Einsatzposition 46 in die Verstauposition 36 eine Raumkurve 64, die Komponenten sowohl in Fahrzeuglängsrichtung X als auch Fahrzeugquerrichtung Y und in der vertikalen Richtung Z aufweist.

Zur Illustration der Schwenkbewegung sind in den Fig. 1 bis 3 Zwischenstellungen 59 der Halter in durchbrochenen Linien gezeigt.

Der Antrieb für die Schwenkhalter 30, 34 kann dabei auf elektrische, hydraulische oder mechanische Weise erfolgen. Bei einer Ausführungsform der Erfindung ist insbesondere vorgesehen, daß der erste äußere Schwenkhalter 30 und der zweite äußere Schwenkhalter 34 getrennte Antriebe, das heißt einen ersten Antrieb 66 für den ersten äußeren Schwenkhalter 30 und einen zweiten Antrieb (in der Fig. 3 aus Gründen der Übersichtlichkeit nicht gezeigt) für den zweiten äußeren Schwenkhalter 34, aufweisen. Bei diesen Antrieben kann es sich beispielsweise um Elektromotoren handeln. Ferner ist eine elektronische Steuerung 67 vorgesehen, die den ersten Antrieb 66 und den zweiten Antrieb miteinander koppelt, so daß die Schwenkhalter 30 und 34 gleichzeitig ausgeschwenkt in die Einsatzposition 46 zw. eingeschwenkt in die Verstauposition 36 werden. Diese elektronische Steuerung 67 kann vorzugsweise auch mit einem Öffnungs- und Schließmechanismus für die Abdeckung 60 zum automatischen Öffnen und Schließen derselben gekoppelt sein.

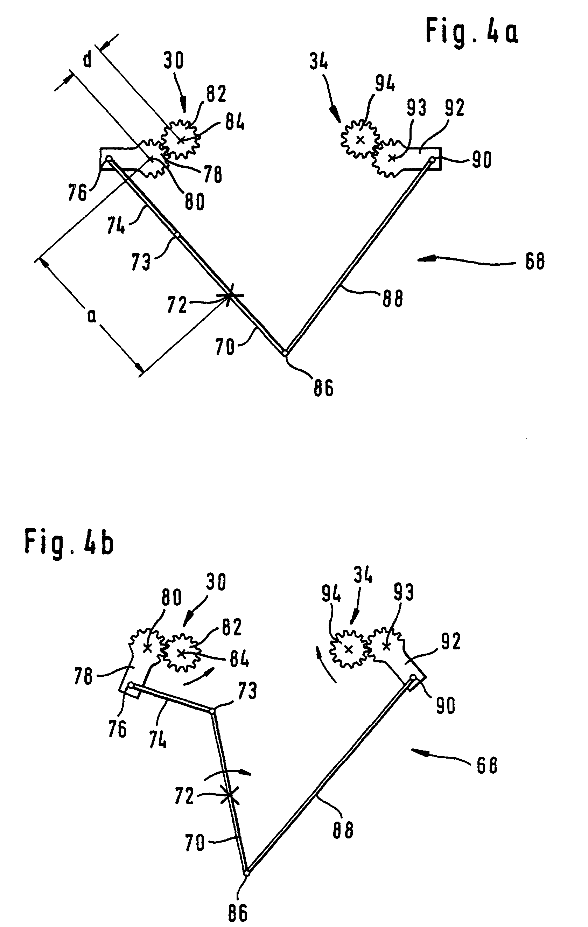

Bei einem zweiten Ausführungsbeispiel der erfindungsgemäßen Windstop-Einrichtung ist vorgesehen, daß die Schwenkbewegung des ersten äußeren Schwenkhalters 30 und die Schwenkbewegung des zweiten äußeren Schwenkhalters 34 mechanisch gekoppelt ist. Dazu ist eine Hebelgestängevorrichtung 68 vorgesehen (Fig. 4a,b). Die Hebelgestängevorrichtung 68 der erfindungsgemäßen Windstop-Einrichtung ist dabei in dem Kassettenelement 14 angeordnet. Sie umfaßt ein drehbar gelagertes Gelenkkopplungselement 70, wobei die Drehachse 72 dieses Gelenkkopplungselementes fahrzeugfest ist. (In Fig. 4a,b sind fahrzeugfeste Drehachsen durch ein Kreuz gekennzeichnet.) Die Drehachse 72 des Gelenkkopplungselements 70 ist insbesondere im wesentlichen parallel oder in einem kleinen spitzen Winkel zu der Fahrzeuglängsrichtung X ausgerichtet.

An das Gelenkkopplungselement 70 ist an einem Gelenk 73 ein erstes Gelenkstangenelement 74 gekoppelt, welches wiederum durch ein weiteres Gelenk 76 an ein Zahnkranzelement 78 angelenkt ist, welches mit einer fahrzeugfesten Drehachse 80 drehbar gelagert ist. Ein Gelenkpunkt des Gelenks 76 liegt dabei nicht auf der Drehachse 80. Das Zahnkranzelement 78 überträgt seine Drehbewegung auf ein Ritzelelement 82, welches ebenfalls mit einer fahrzeugfesten Drehachse 84 drehbar gelagert ist. Das Ritzelelement 82 ist starr mit dem ersten äußeren Schwenkhalter 30 verbunden und durch Drehung des Ritzelelementes 82 wird die Schwenkbewegung dieses Schwenkhalters 30 bewirkt.

An das Gelenkkopplungselement 70 ist weiter über ein Gelenk 86 ein zweites Gelenkstangenelement 88 angelenkt. Dieses zweite Gelenkstangenelement 88 ist wiederum über ein weiteres Gelenk 90 an ein zweites Zahnkranzelement 92 angelenkt, welches ebenfalls mit einer fahrzeugfesten Drehachse 93 drehbar gelagert ist und mittels dem ein Ritzelelement 94, das mit dem zweiten äußeren Schwenkhalter 34 starr verbunden ist, in eine Drehbewegung zur Verschwenkung des zweiten äußeren Schwenkhalters 34 versetzbar ist.

Das erste Gelenkstangenelement 74 ist kürzer als das zweite Gelenkstangenelement 88. Auf diese Weise läßt sich erreichen, daß der erste äußere Schwenkhalter 30 gegenüber dem zweiten äußeren Schwenkhalter 34 etwas schneller ausgeschwenkt wird bzw. beim Zurückschwenken der zweite äußere Schwenkhalter 34 etwas schneller zurückgeschwenkt wird als der erste äußere Schwenkhalter 30. Das erste Zahnkranzelement 78 weist nämlich eine größere Drehgeschwindigkeit auf als das zweite Zahnkranzelement 92. Dadurch dreht sich der erste äußere Schwenkhalter 30 im selben Zeitraum in einem größeren Drehwinkel als der zweite äußere Schwenkhalter 34. Beim Ausschwenken bewirkt dies die Vorführung des äußeren Schwenkhalters 30, beim Einschwenken die Nachführung. Auf diese Weise läßt sich eine gute Entfaltung bzw. Zurückfaltung der Windstop-Flächenelemente 24 erreichen.

Es ist insbesondere bei der erfindungsgemäßen Windstop-Einrichtung vorgesehen, daß ein Abstand d zwischen der Drehachse 80 für das Zahnkranzelement 78 und der Drehachse 84 für das Ritzelelement 82 kleiner ist als der Abstand a zwischen der Drehachse 80 und der Drehachse 72 des Gelenkkopplungselements 70. Auf diese Weise läßt sich erreichen, daß die Schwenkbewegung der Halter einen Bereich von 0° bis zu ca. 200° umfaßt, so daß ein vollständiges Schwenken von der Verstauposition 36 in die Einsatzposition 46 ermöglicht ist.

Die Hebelgestängevorrichtung 68 der erfindungsgemäßen Windstop-Einrichtung arbeitet wie folgt:

Das Gelenkkopplungselement 70 wird um die Drehachse 72 gedreht. In Fig. 4b ist eine Bewegung gezeigt, die ein Schwenken der Halter 22 aus der Verstauposition 36 in die Einsatzposition 46 bewirkt. Durch diese Drehbewegung werden das erste Gelenkstangenelement 74 und das zweite Gelenkstangenelement 88 mitgeführt. Dies bewirkt eine Drehung jeweils des ersten Zahnkranzelementes 78 und des zweiten Zahnkranzelementes 92. Da die Drehachse 72 nicht symmetrisch zu den jeweiligen Drehachsen der Zahnkranzelemente 78 und 92 liegen und das erste Gelenkstangenelement 74 kürzer ist als das zweite Gelenkstangenelement 88 bewirkt die Drehung des Gelenkkopplungselementes 70 eine entgegengesetzte Drehbewegung des ersten Zahnkranzelementes 78 zu dem zweiten Zahnkranzelement 92. Bei der in den Fig. 4a, b gezeigten Variante eines Ausführungsbeispieles bewirkt eine Drehung des Gelenkkopplungselementes 70 im Uhrzeigersinn eine Drehung des ersten Zahnkranzelementes 78 im Gegenuhrzeigersinn und eine Drehung des zweiten Zahnkranzelementes 92 im Uhrzeigersinn.

Bei einer Variante der erfindungsgemäßen Windstop-Einrichtung ist vorzugsweise vorgesehen, daß das Gelenkkopplungselement 70 selbst einen Antrieb, wie einen Schneckentrieb (in der Fig. 4 nicht gezeigt), zur Bewirkung der Drehbewegung des Gelenkkopplungselements 70 um die Drehachse 72 aufweist.

Sämtliche im Zusammenhang mit der mechanischen Kopplung der Bewegungen der Halter 22 sind auch mit zwei Antrieben und einer geeigneten Steuerung für diese realisierbar.

Es ist ferner vorteilhafterweise vorgesehen, daß Endschalter (in den Fig. nicht gezeigt) vorgesehen sind, die erkennen, wann die Einsatzposition 46 der Halter 22 erreicht ist. Diese Endschalter können beispielsweise elektronische Schalter wie Winkelmesser umfassen oder mechanische Elemente wie beispielsweise Anschlagelemente.

Bei dem vorstehend beschriebenen Ausführungsbeispiel umfaßt die erfindungsgemäße Windstop-Einrichtung ein Kassettenelement 14, in welchem der Verstauraum 20 gebildet ist, wobei das Kassettenelement 14 fest mit dem Cabriofahrzeug 12 montierbar ist.

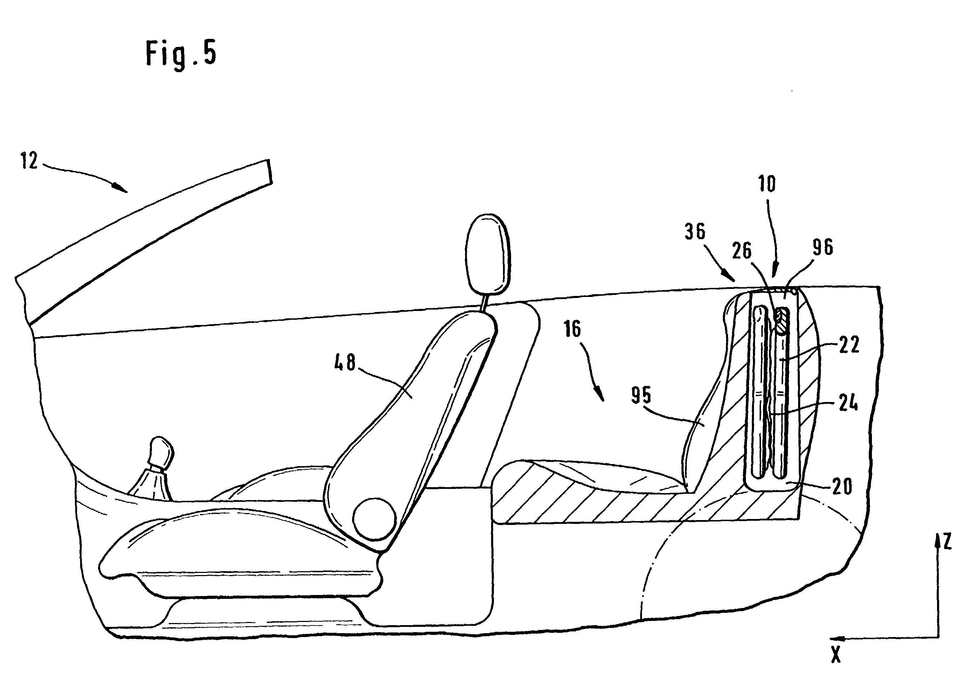

Bei einem dritten Ausführungsbeispiel, welches in Fig. 5 gezeigt ist, ist der Verstauraum in den Rücksitzen 16 des Cabriofahrzeuges 12 integriert. Dazu weist eine Rückenlehne 95 der Rücksitze 16 einen Hohlraum 96 auf. Der Hohlraum 96 ist beispielsweise durch ein Hartschalenelement gebildet, das zwischen einem Rückenlehnen-Polster der Rücksitze 16 und einer hinteren Wand der Rückenlehne 95 angeordnet ist. Das Ausschwenken der Halter 22 in die Einsatzposition 46 und das Verstauen der Halter 22 in die Verstauposition 36 funktioniert bei dieser Variante genauso wie bereits oben beschrieben.

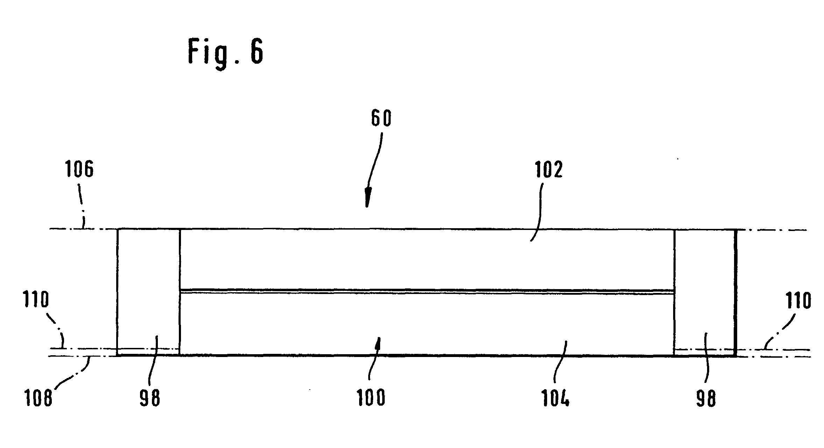

Die Abdeckung 60 ist bei einem vierten Ausführungsbeispiel der erfindungsgemäßen Windstop-Einrichtung mehrteilig ausgebildet. Sie umfaßt äußere Abdeckungselemente 98, welche in einem Bereich oberhalb der Schwenklager 26 angeordnet sind, und eine einteilige oder mehrteilige Querabdeckung 100. Bei dem in Fig. 6 gezeigten vierten Ausführungsbeispiel sind ein erstes Querabdeckungselement 102 und ein zweites Querabdeckungselement 104 vorgesehen. Das erste Querabdeckungselement 102 weist eine Schwenkachse 106 auf und das zweite Querabdeckungselement 104 weist eine Schwenkachse 108 auf. Erstes und zweites Querabdeckungselemente 102 und 104 lassen sich nach oben und zurück und/oder auch nach unten und wieder zurück bezogen auf die vertikale Achse Z um ihre jeweiligen Schwenkachsen schwenken.

Die äußeren Abdeckungselemente 98 weisen jeweils ebenfalls Schwenkachsen 110 auf, die entkoppelt von den Schwenkachsen 106 und 108 sind. Die äußeren Abdeckungselemente 98 sind dadurch unabhängig von der Querabdeckung 100 schwenkbar, und zwar bezogen auf die vertikale Achse Z nach oben und wieder zurück.

Es ist vorgesehen, daß die Querabdeckungselemente 102, 104 eine Verspannung gegenüber dem Verstauraum 20 aufweisen. Diese ist so ausgebildet, daß bei Ausschwenken der Halter 22 aus der Verstauposition 36 über einen Antrieb die Querabdeckungselemente 102, 104 automatisch geöffnet werden, daß dann aber, wenn die Einsatzposition 46 erreicht ist, sich die Querabdeckungselemente 102, 104 wieder automatisch durch die Verspannung schließen, so daß kein Schmutz oder Staub in den leeren Verstauraum 20 gelangen kann. Durch die Schwenkbewegung der Halter 22 werden die äußeren Abdeckungselemente 98 ebenfalls soweit geöffnet, daß die Schwenkbewegung ermöglicht ist und ein Eindringen von Schmutz in den Verstauraum 20 weitgehend verhindert ist.

Durch die Ausbildung der Abdeckung 60 der erfindungsgemäßen Windstop-Einrichtung wird erreicht, daß in der Verstauposition die Halter 22 und die Windstop-Flächenelemente 24 im wesentlichen nicht sichtbar sind und kein Schmutz und dergleichen in den Verstauraum 20 eindringen kann und daß bei Ausfahren der Windstop-Flächenelemente 24 in die Einsatzposition 46 ein hoher Bedienungskomfort erreicht ist, da sich die Abdeckung 60 weitgehend automatisch wieder schließt. In diesem Zusammenhang ist es insbesondere vorteilhaft, wenn der Antrieb für die Halter zu deren Verschwenkung aus der Einsatzposition in die Verstauposition bzw. aus der Verstauposition in die Einsatzposition von einer Fahrgastzelle des Cabriofahrzeuges 12 betätigbar ist, um somit einen hohen Bedienungskomfort zu erreichen.

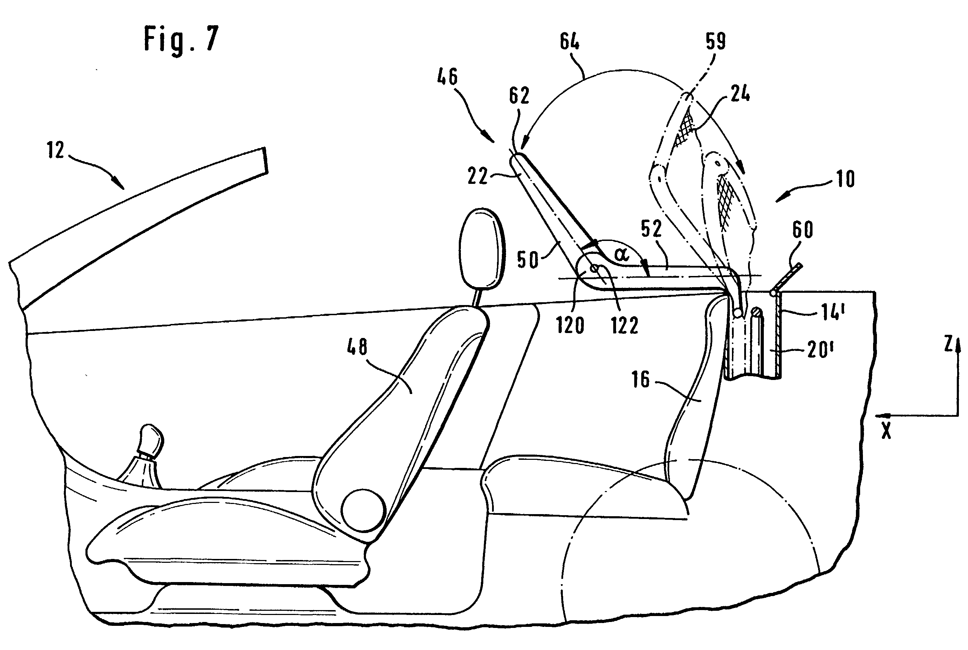

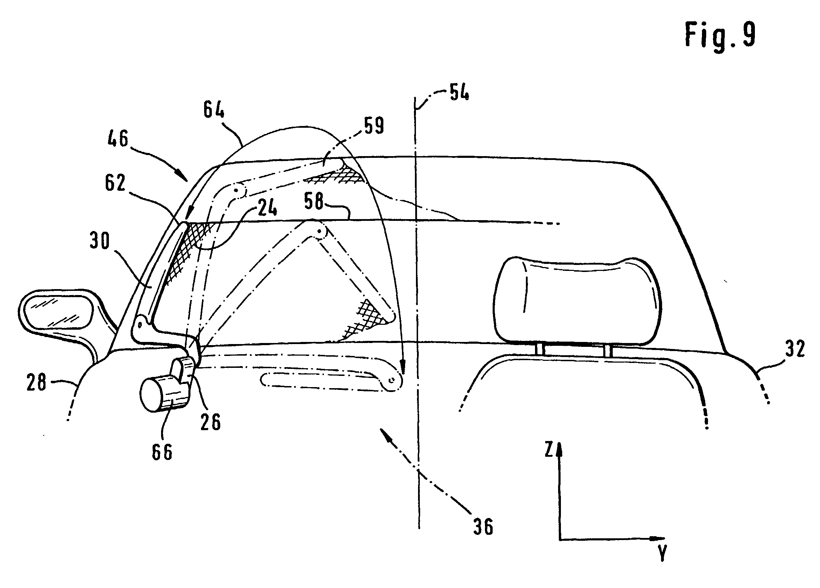

Bei einem fünften Ausführungsbeispiel einer erfindungsgemäßen Windstop-Einrichtung, dargestellt in Fig. 7 bis 10, ist jeweils das Windschott-Haltebügelelement 50 relativ zum Abdeckungs-Haltebügelelement 52 bewegbar, und zwar mittels eines Gelenks 120, wobei eine Schwenkachse 122 dieses Gelenks sich beispielsweise ungefähr parallel zu der Fahrzeugquerrichtung erstreckt. Die Schwenkachse 122 kann aber auch schräg zur Fahrzeugquerrichtung und gegebenenfalls schräg zur vertikalen Achse Z verlaufen.

Damit ist bei jedem der Schwenkhalter 30, 34 das jeweilige Windschott-Haltebügelelement 50 relativ zum Abdeckungs-Haltebügelelement 52 so bewegbar, daß sich der jeweilige Schwenkhalter 30, 34 auf kleinstem Raum in dem Verstauraum 20' verstauen läßt, welcher kleiner ist als der Verstauraum beispielsweise beim ersten Ausführungsbeispiel.

Die Verschwenkung des Windschott-Haltebügelelements 50 relativ zum Abdeckungs-Haltebügelelement 52 erfolgt dabei so, daß in der Einsatzposition der Schwenkhalter 30, 34 jeweils das Windschott-Haltebügelelement 50 relativ zum Abdeckungs-Haltebügelelement 52 so stellt, daß die beiden Windschott-Haltebügelelemente 50 der Schwenkhalter 30, 34 mit dem von diesen aufgespannten Bereichen des Windstop-Flächenelements 24 das Windschott 25 bilden, während der von den Abdeckungs-Haltebügelelementen 52 aufgespannte Bereich 27 des Windstop-Flächenelements 24 die Abdeckung für die Rücksitze 16 bilden.

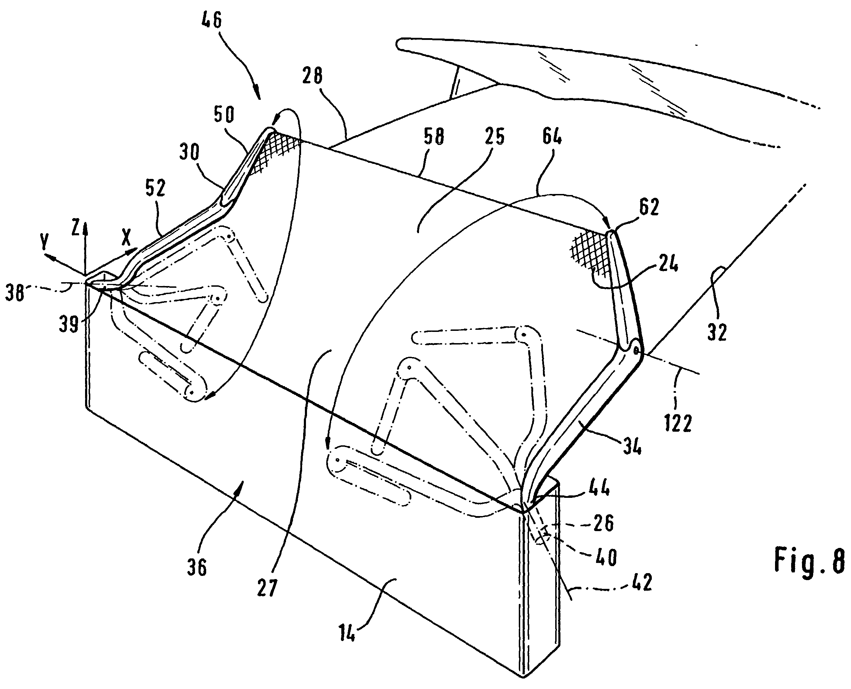

Werden jedoch die Schwenkhalter 30, 34 von ihrer in den Fig. 7 und 8 dargestellten Einsatzpositionen in ihre Verstauposition 36 bewegt, so erfolgt vorzugsweise bis zur Beendigung des Bewegens der Schwenkhalter 30, 34 von der Einsatzposition in die Verstauposition ein Verschwenken der Windschott-Haltebügelelemente 50 gegenüber den entsprechenden Abdeckungs-Haltebügelelementen 52 von der vorstehend beschriebenen aktiven Stellung in eine inaktive Stellung, wie in den Fig. 7, 8 und 9 jeweils gestrichelt dargestellt. Vorzugsweise erfolgt das Schwenken der Windschott-Haltebügelelemente 50 gegenüber den jeweiligen Abdeckungs-Haltebügelelementen 52 so weit, daß die Windschott-Haltebügelelemente 50 sich in einer inaktiven Stellung ungefähr parallel zu den Abdeckungs-Haltebügelelementen 52 erstrecken. Die ungefähr parallele Lage der Haltebügelelemente 50, 52 kann so gestaltet sein, daß diese in Z-Richtung übereinander oder in X-Richtung nebeneinander liegen, wodurch jeweils in der anderen Richtung der Raumbedarf minimal ist. Besonders günstig ist eine Lösung, bei welcher die Abdeckungs-Haltebügelelemente 52 und die Windschott-Haltebügelelemente 50 in der inaktiven Stellung ineinandergreifen, das heißt, eines derselben eine Ausnehmung, beispielsweise eine U-förmige Ausnehmung, aufweist, in welches das andere in der inaktiven Stellung zumindest teilweise eintaucht, somit die Haltebügelelemente 50, 52 einen minimalen Raumbedarf in der Verstauposition im Verstauraum 20 benötigen.

Um den Verstauraum besonders in vertikaler Richtung klein zu halten, ist vorzugsweise vorgesehen, daß die Haltebügelelemente 50, 52 in der Verstauposition in Fahrzeuglängsrichtung X gesehen aufeinanderfolgend angeordnet sind, was vorzugsweise durch eine geringfügig unterschiedliche Ausrichtung der Schwenkachsen 38, 42, das heißt geringfügig unterschiedliche Schräglage, realisierbar ist oder durch einen Versatz der Schwenklager 39, 40 in Fahrzeuglängsrichtung X.

Beispielsweise ist es denkbar, das Verschwenken der Windschott-Haltebügelelemente 50 relativ zu den Abdeckungs-Haltebügelelementen 52 vor einem Bewegen der Abdeckungs-Haltebügelelemente 52 relativ zum Cabriofahrzeug, das heißt einer Karosse desselben, durchzuführen. Besonders günstig ist es jedoch, wenn die Windschott-Haltebügelelemente 50 relativ zu den Abdeckungs-Haltebügelelementen 52 dann bewegt werden, wenn auch die Abdeckungs-Haltebügelelemente 52 um die jeweiligen Schwenkachsen 38, 42 verschwenkt werden.

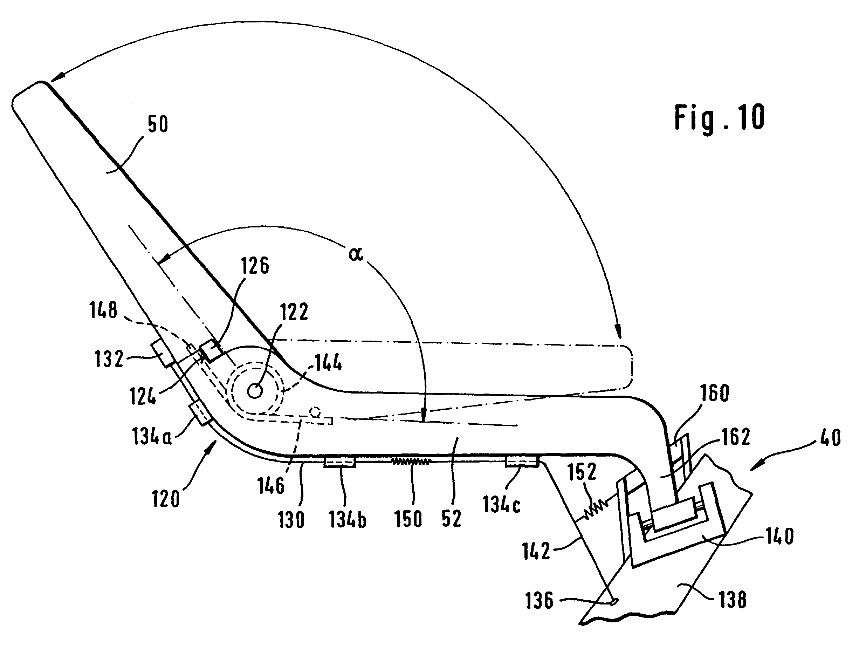

Vorzugsweise ist hierzu, wie in Fig. 10 dargestellt, das Gelenk 120 so ausgebildet, daß dieses eine fest mit dem Abdeckungs-Haltebügelelement 52 verbundene Anschlagnase 124 aufweist, gegen welche ein Anschlagkörper 126 anlegbar ist, der fest mit dem Windschott-Haltebügelelement 50 verbunden ist, wobei der Anschlagkörper 126 dann an der Anschlagnase 124 anliegt, wenn das Windschott-Haltebügelelement 50 in seiner aktiven Stellung steht. Das Windschott-Haltebügelelement 50 wird vorzugsweise in seiner aktiven Stellung gehalten durch einen Seilzug 130, welcher im Bereich eines Festlagers 132 fest mit dem Windschott-Haltebügelelement 50 verbunden ist und über Führungselemente 134 so am Abdeckungs-Haltebügelelement 52 geführt ist, daß eine Zugwirkung des Seilzugs 130 das Windschott-Haltebügelelement 50 in seiner aktiven Stellung hält. Vorzugsweise sind die Führungselemente 134 so angeordnet, daß der Seilzug 130 auf einer der inaktiven Stellung des Windschott-Haltebügelelements 50 gegenüberliegenden Seite des Abdeckungs-Haltebügelelements 52 angeordnet ist.

Der Seilzug 130 ist ferner noch zu einem fahrzeugseitigen Festlager 136 geführt, welches beispielsweise an einem Träger 138 für einen Lagerbock 140 des jeweiligen Schwenklagers 39, 40 angeordnet ist.

Das Festlager 136 liegt dabei so, daß sich der Seilzug von dem dem Festlager 136 zugewandten Führungselement 134c bis zum Festlager mit einem freien Abschnitt 142 erstreckt, welcher in der Einsatzposition des Abdeckungs-Haltebügelelements 52 gespannt ist und eine maximale Länge aufweist, so daß der Seilzug 130 mit Zug auf das Festlager 132 wirkt, somit das Windschott-Haltebügelelement 50 aufgrund der Zugbeaufschlagung in seine aktive Stellung verschwenkt ist, in welcher der Anschlagkörper 126 an der Anschlagnase 124 anliegt.

Das Festlager 136 ist dabei aber auch so angeordnet, daß bei einer Bewegung des Abdeckungs-Haltebügelelements 52 aus der Einsatzposition heraus in Richtung seiner Verstauposition der freie Abschnitt 142 zunehmend verkürzt wird und dabei auch schließlich entspannt wird und somit die Zugwirkung des Seilzugs 130 auf das Festlager 136 nachläßt.

Aufgrund einer dem Gelenk 120 zugeordneten, vorzugsweise im Gelenk 120 vorgesehenen, Drehfeder 144, welche mit ihren beiden Schenkeln 146 und 148 sowohl auf das Abdeckungs-Haltebügelelement 52 als auch auf das Windschott-Haltebügelelement 50 wirkt und bestrebt ist, den Winkel α zwischen den beiden zu verkleinern, erfolgt bei nachlassender Zugwirkung des Seilzugs 130 ein zunehmendes Verschwenken des Windschott-Haltebügelelements 50 in Richtung des Abdeckungs-Haltebügelelements 52 unter Verkleinerung des Winkels α und zwar mit zunehmender Verkürzung des freien Abschnitts 142 des Seilzugs 130.

Das dem Festlager 136 zugewandte Führungselement 134c des Seilzugs 130 bewegt sich daher bei der Bewegung des Abdeckungs-Haltebügelelements 52 von der Einsatzposition in Richtung der Verstauposition auf einer Bahn dergestalt, daß der Abstand zwischen dem Führungselement 134c und dem Festlager 136 stets kleiner wird und somit sich auch der freie Abschnitt 142 verkürzen kann, so daß in dem Maße auch das Windschott-Haltebügelelement 50 in Richtung des Abdeckungs-Haltebügelelements 52 verschwenkt. Mit diesem Seilzug 130 sowie der Anordnung der Festlager 132 und 136 sowie der Führungselemente 134 in der beschriebenen Art und Weise ist somit eine zwangsgesteuerte Bewegung des Windschott-Haltebügelelements 50 relativ zum Abdeckungs-Haltebügelelement 52 möglich und zwar koordiniert mit der Bewegung des Abdeckungs-Haltebügelelements 52 von der Einsatzposition in die Verstauposition und umgekehrt.

Um sicherzustellen, daß das Windschott-Haltebügelelement 50 relativ zum Abdeckungs-Haltebügelelement 52 stets in der Stellung verbleibt, in welcher der Anschlagkörper 126 an der Anschlagnase 124 anliegt und zwar vorzugsweise unter Wirkung einer elastischen Kraft, ist im Bereich des Seilzugs 130 ein elastisches Zugelement 150 vorgesehen, welches beispielsweise als starke Feder ausgebildet ist. Dieses Zugelement 150 dient dem Ausgleich von Toleranzen und dazu, in der aktiven Stellung des Windschott-Haltebügelelements 50 relativ zum Abdeckungs-Haltebügelelement 52 den Anschlagkörper 126 stets an der Anschlagnase 124 fest anliegend zu halten, ohne daß sich die Toleranzen negativ auswirken.

Um in der Verstauposition sicherzustellen, daß der freie Abschnitt 142 selbst bei in der inaktiven Stellung stehendem Windschott-Haltebügelelement noch zusätzlich unkontrolliert durchhängt, ist ferner ein elastisches Ausrichtelement 152, beispielsweise in Form ebenfalls einer Feder, vorgesehen, welche quer zur Längsrichtung des freien Abschnitts 142 auf diesen einwirkt und lediglich dazu dient, den freien Abschnitt 142 am Durchhängen zu hindern, ohne allerdings eine Bewegung des Windschott-Haltebügelelements 50 relativ zum Abdeckungs-Haltebügelelement 52 zu beeinflussen. Vorzugsweise ist das Ausrichtelement 152 so angeordnet, daß es in einem mittigen Bereich auf den freien Abschnitt 142 wirkt und diesen in Richtung beispielsweise des Lagerbocks 140 des Schwenklagers 40 beaufschlagt.

Um ferner auch die Einsatzposition des Abdeckungs-Haltebügelelements 52 vorzugsweise definiert vorgeben zu können, ist vorgesehen, daß der Lagerbock 140 noch mit einem Gegenlagerkörper 160 versehen ist, gegen welchen das Abdeckungs-Haltebügelelement 52 in seiner Einsatzposition anlegbar ist. Vorzugsweise liegt dabei der Gegenlagerkörper 160 so, daß das Abdeckungs-Haltebügelelement 52 mit seinem sich unmittelbar an das Schwenklager 40 anschließenden Abschnitt, vorzugsweise einem abgekröpften Abschnitt 162, an diesem Gegenlagerkörper 160 anlegbar ist, so daß der Gegenlagerkörper 160 noch unterhalb der für die erfindungsgemäße Windstop-Einrichtung vorgesehenen Abdeckung 60 angeordnet werden kann.

Insoweit als diejenigen Teile des fünften Ausführungsbeispiels mit den vorangegangen Ausführungsbeispielen identisch sind, sind dieselben Bezugszeichen verwendet, so daß auch hinsichtlich der Beschreibung der einzelnen Teile auf die Ausführungen zum ersten Ausführungsbeispiel vollinhaltlich Bezug genommen werden kann. Ferner wird auch hinsichtlich der beim fünften Ausführungsbeispiel möglichen Bewegungen der Halter auf die Varianten Bezug genommen, die im Zusammenhang mit dem ersten bis vierten Ausführungsbeispiel beschrieben wurden.

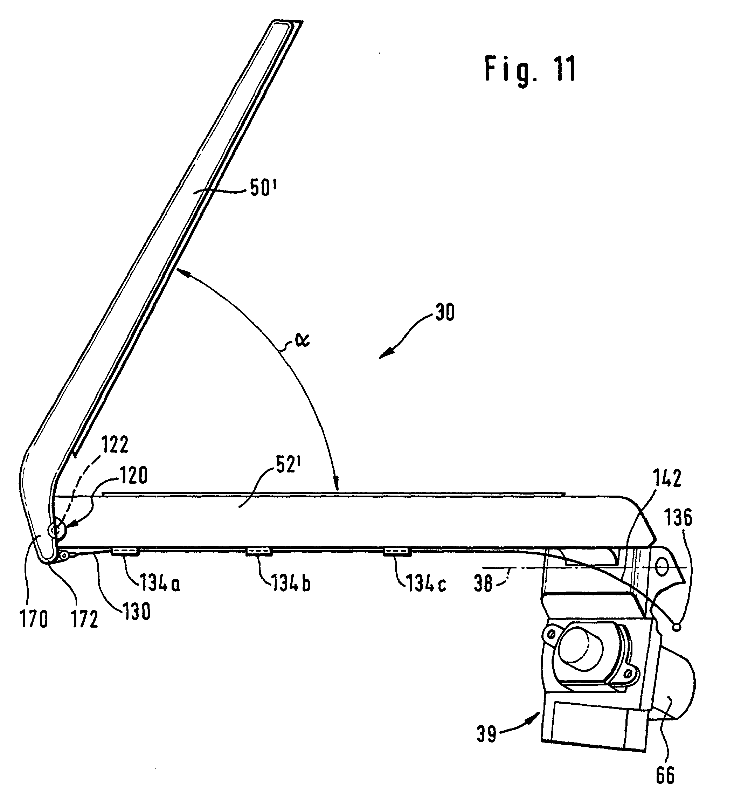

Bei einem sechsten Ausführungsbeispiel, dargestellt in Fig. 11, ist in Abwandlung zum fünften Ausführungsbeispiel, dargestellt in den Fig. 7 bis 10, das Windschott-Haltebügelelement 50' in der Einsatzposition so ausgebildet, daß es mit dem entsprechenden Abdeckungs-Haltebügelelement 52' einen spitzen Winkel einschließt, im Gegensatz zum fünften Ausführungsbeispiel gemäß Fig. 10.

Ferner ist das Windschott-Haltebügelelement 50' so ausgebildet, daß es sich nicht nur auf einer Seite des Gelenks 120 erstreckt, sondern sich mit einem Arm 170 über das Gelenk 120 mit der Drehachse 122 hinauserstreckt und zwar so, daß der Arm 170 im Bereich eines vorderen Endes des jeweiligen Abdeckungs-Haltebügelelements 52 liegt. Damit kann der Seilzug 130 an einem unteren Ende 172 des Arms 170 angreifen, um die Schwenkbewegung des Windschott-Haltebügelelements 50 relativ zum Abdeckungs-Haltebügelelement 52 zu bewirken.

Das Gelenk 120 ist in gleicher Weise wie beim fünften Ausführungsbeispiel mit der zeichnerisch nicht dargestellten Drehfeder versehen, welche bestrebt ist, den Winkel α zwischen dem Windschott-Haltebügelelement 50' und dem Abdeckungs-Haltebügelelement 52' zu verringern.

Der Seilzug 130 ist in gleicher Weise wie beim fünften Ausführungsbeispiel durch Führungselemente 134 an dem Abdeckungs-Haltebügelelement 52' geführt und geht in den freien Abschnitt 142 über, welcher seinerseits mit dem Festlager 136 an der Karosserie angreift.

Vorzugsweise ist es bei exakter Positionierung des Festlagers 136 nicht notwendig, den Seilzug 130 noch zusätzlich mit dem Zugelement 150 zu versehen. Es aber auch möglich, das Zugelement 150 noch zusätzlich zu verwenden, um eine Übertotpunktstellung der Schwenkhalter 30, 34 in der Einsatzposition zu erhalten.

Bei diesem Ausführungsbeispiel ist das gezeichnete Schwenklager 39 so ausgebildet, daß direkt mit diesem der Antriebsmotor 66 verbunden ist, welcher dazu dient, das Abdeckungs-Haltebügelelement 52' um die Schwenkachse 38 motorgetrieben zu verschwenken, wobei durch den Seilzug 130 eine mechanische Zwangssteuerung der Verschwenkung des Windschott-Haltebügelelements 50' von einer sich parallel zum Abdeckungs-Haltebügelelement 52' erstreckenden Verstauposition in die in Fig. 11 dargestellte Einsatzposition zu bewirken.

Im übrigen ist das sechste Ausführungsbeispiel ähnlich ausgebildet wie das fünfte Ausführungsbeispiel, so daß hinsichtlich weiterer Einzelheiten auf die Ausführungen zum fünften Ausführungsbeispiel verwiesen ist und die entsprechenden Elemente des sechsten Ausführungsbeispiels die gleichen Bezugszeichen wie die des fünften Ausführungsbeispiels tragen.

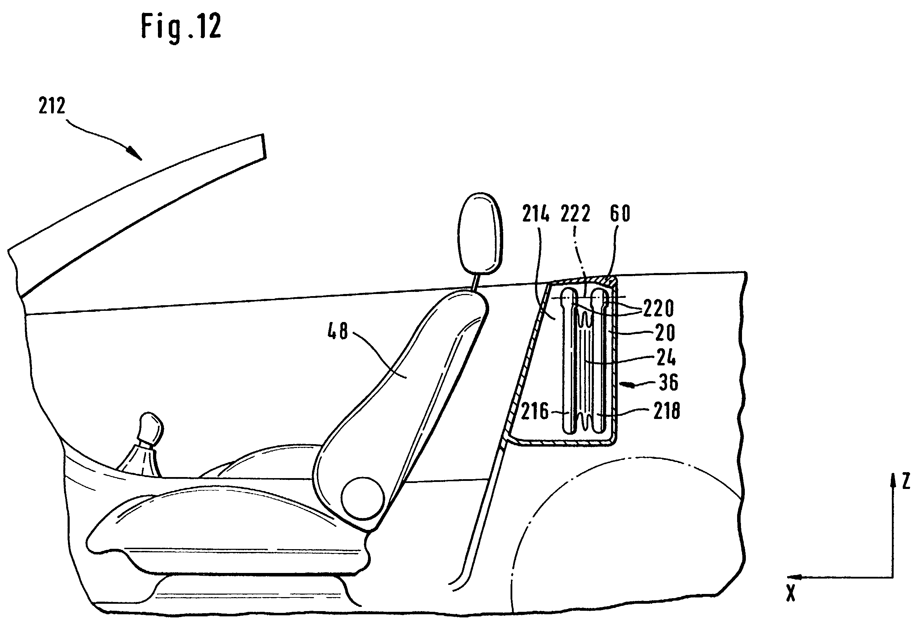

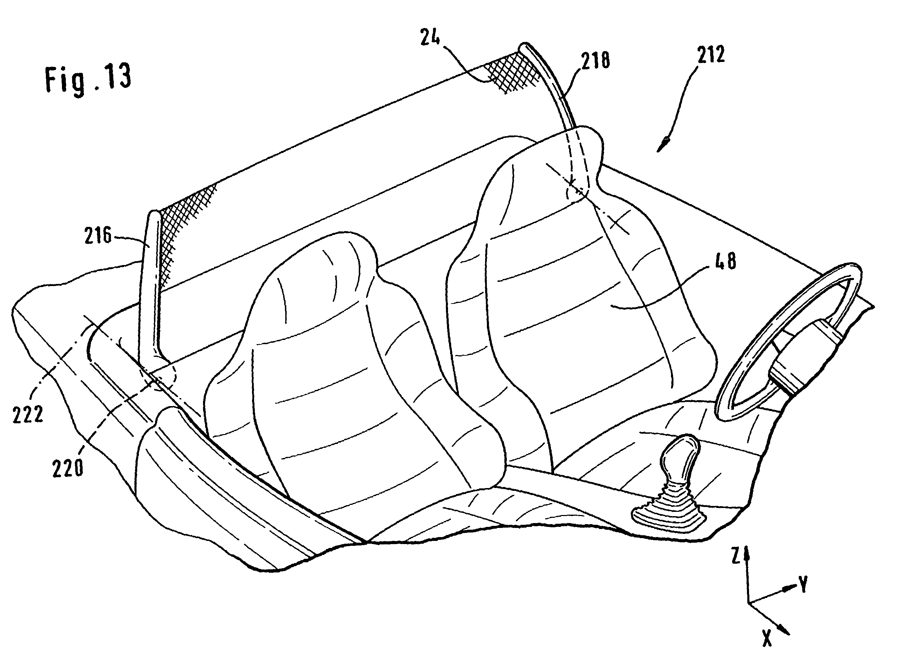

Ein siebtes Ausführungsbeispiel einer erfindungsgemäßen Vorrichtung, welche in Fig. 12 und 13 gezeigt ist, läßt sich für Zweisitzer-Cabriofahrzeuge 212 einsetzen. Bei diesen Fahrzeugen muß der Bereich oberhalb der Rücksitze 16, welcher bei Viersitzer-Cabriofahrzeugen 12 zum erreichen einer guten Windstop-Funktion abgedeckt sein muß, nicht abgedeckt werden.

In dem Zweisitzer-Cabriofahrzeug 212 ist an dem Fahrzeug hinter den Vordersitzen 48 ein Hohlraum 214 vorgesehen, welcher als Verstauraum 20 wirkt. Dieser Hohlraum 214 weist eine Abdeckung 60 auf, die sich öffnen und schließen läßt. Die Halter 22 sind bei diesem Ausführungsbeispiel als Querschwenkhalter 216, 218 ausgebildet. In der Verstauposition 36 sind in dem Hohlraum 214 der erste äußere Querschwenkhalter 216 und der zweite äußere Querschwenkhalter 218 angeordnet. Durch diese Querschwenkhalter 216 und 218 werden die in der Verstauposition 36 gefalteten Windstop-Flächenelemente 24 gehalten.

Der erste äußere Querschwenkhalter 216 und der zweite äußere Querschwenkhalter 218 sind jeweils mittels Schwenklager 220 an dem Zweisitzer-Cabriofahrzeug 212 gehalten. Erfindungsgemäß sind dabei Schwenkachsen 222 bei dieser Variante einer Ausführungsform in einem kleinen spitzen Winkel zur Fahrzeuglängsrichtung X orientiert. Dadurch bewegen sich die Querschwenkhalter 216 und 218 beim Ausschwenken in die Einsatzposition 46 in dem kleinen spitzen Winkel zu der Y-Z-Ebene. Bezogen auf die zugehörigen Schwenkachsen 222 weisen der erste äußere Querschwenkhalter 216 und der zweite äußere Querschwenkhalter 218 entgegengesetzte Drehbewegungen auf. Auf diese Weise werden beim Schwenken aus der Verstauposition 36 aus dem Verstauraum 20 in die Einsatzposition 46 die Windstop-Flächenelemente 24 ausgefaltet, so daß sie in der Einsatzposition 46 eine gute Windstop-Funktion aufweisen. Bezogen auf die Fahrzeuglängsrichtung X sind dabei die Schwenklager 220 für den ersten äußeren Querschwenkhalter 216 und den zweiten äußeren Querschwenkhalter 218 gegeneinander versetzt, um eine bessere Verstauungs- und Faltungswirkung für die Windstop-Flächenelemente 24 in der Verstauposition 36 zu erreichen.

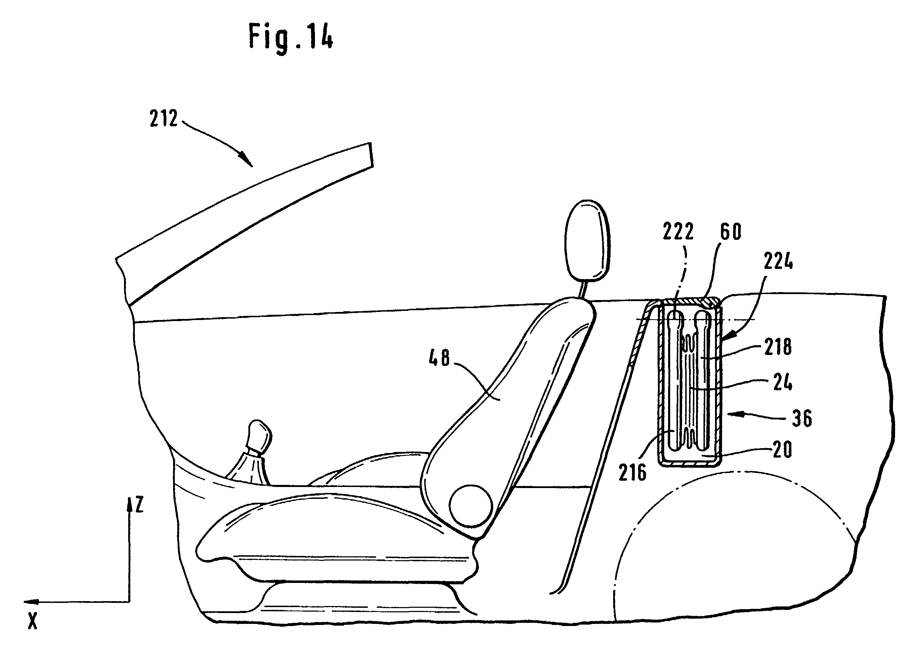

Es kann, wie in Fig. 14 gezeigt, bei einem achten Ausführungsbeispiel auch vorgesehen sein, daß in dem Zweisitzer-Cabriofahrzeug 212 hinter den Vordersitzen 48 ein Kassettenelement 224 eingebaut ist, durch dessen Innenraum der Verstauraum 20 gebildet ist.

Es ist dadurch beispielsweise möglich, die Halter 22 mit den Windstop-Flächenelemente 24 in dem Kassettenelement 224 zu montieren, das dann nur noch an dem Zweisitzer-Cabriofahrzeug 212 montiert werden muß. Dadurch ist der Aufwand zur Montage der erfindungsgemäßen Windstop-Einrichtung an dem Zweisitzer-Cabriofahrzeug 212 verringert.

Bezüglich der Funktion einer Windstop-Einrichtung gegenüber der oben beschriebenen Variante ergeben sich bei der Variante mit dem Kassettenelement 224 keine Unterschiede.

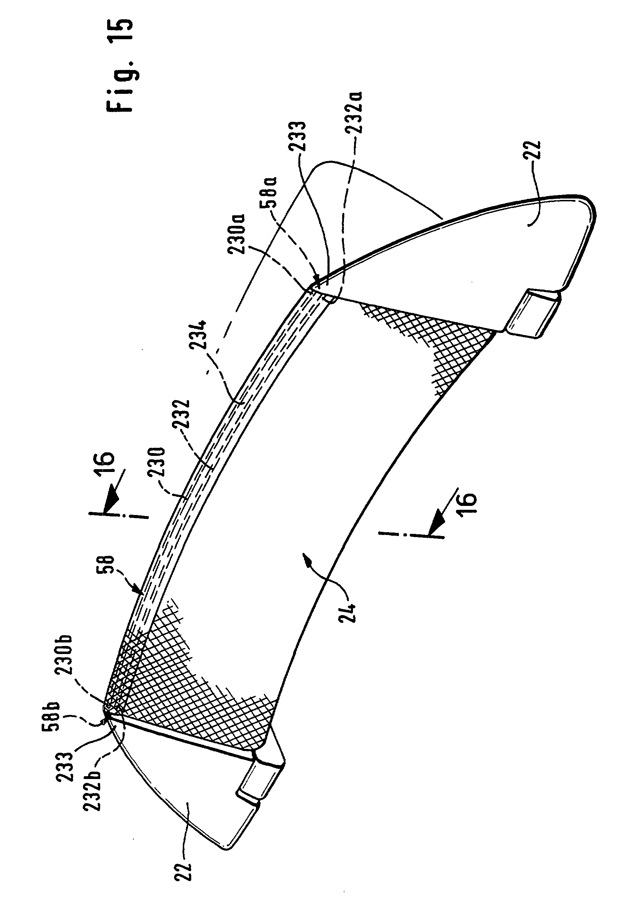

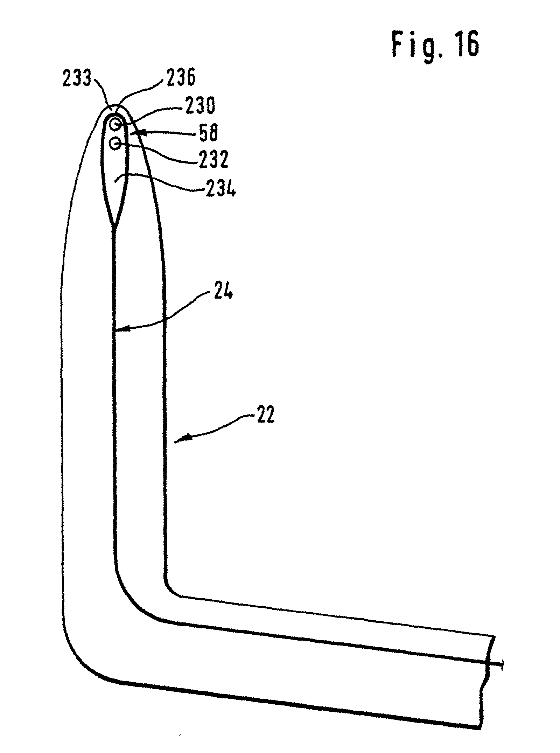

Bei einem weiteren Ausführungsbeispiel einer erfindungsgemäßen Windstop-Einrichtung, dargestellt in den Fig. 15 bis 17, werden die Windstop-Flächenelemente 24 durch die als Ganzes mit 58 bezeichneten Spannmittel aufgespannt, welche mit halterseitigen Enden 58a, b mit den Haltern 22 verbunden sind.

Die Spannmittel 58 umfassen dabei einerseits ein Querspreizelement 230, welches mit seinen halterseitigen Enden 230a, 230b an den Haltern 22 gehalten ist, und ein Kontraktionselement 232, welches ebenfalls mit seinen Enden 232a und 232b an den Haltern 22 gehalten ist.

Vorzugsweise ist das Querspreizelement 230 mit seinen Enden 230a, 230b an oberen Enden 233 der Halter 22 gehalten und hält die Windstop-Flächenelemente 24 dadurch, daß eine das Querspreizelement 230 umschließende Tasche 234 mit ihrem obersten Bereich 236 auf dem zwischen den Haltern 22 gespannten Querspreizelement 230 aufliegt.

Unter dem Querspreizelement 230 liegt dann das Kontraktionselement 232.

Die Tasche 234, welche aus demselben Material gebildet ist wie die Windstop-Flächenelemente 24, ist dabei so dimensioniert, daß die Spannmittel 58 lose in dieser geführt sind.

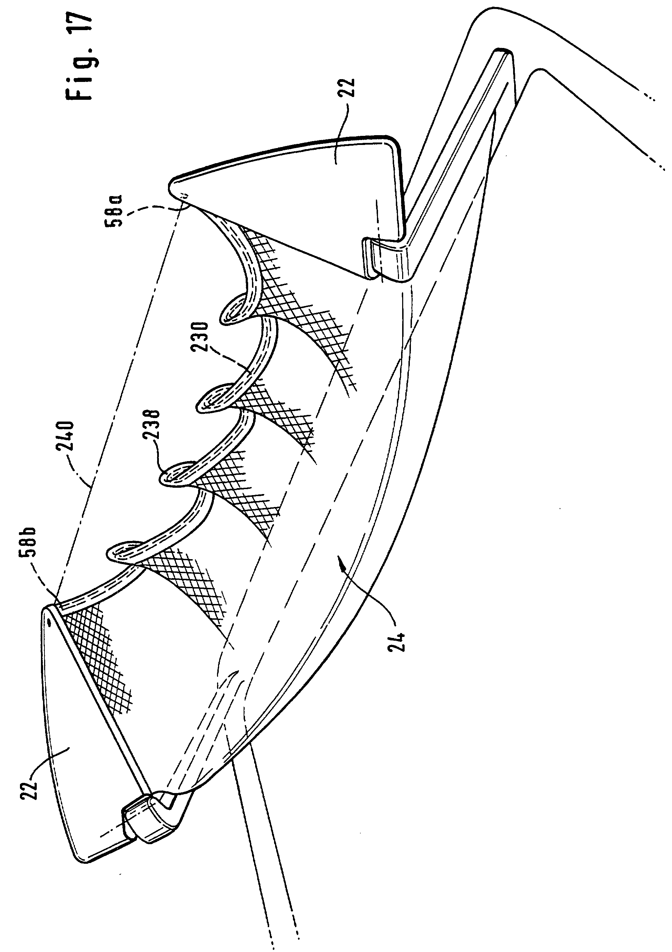

Werden nun die Halter 22 von ihrer Einsatzposition in Richtung ihrer Verstauposition in den Verstauraum bewegt, wie in Fig. 17 durch eine Zwischenposition dargestellt, so reduziert sich der Abstand zwischen den halterseitigen Enden 58a, 58b der Spannmittel 230, 232 und dabei geht das Querspreizelement 230 von seiner in Fig. 15 dargestellten, im wesentlichen langgestreckten, vorzugsweise im wesentlichen geradlinigen Form in eine in Fig. 17 schematisch dargestellte gespreizte Form über, in welcher sich das Querspreizelement 230 nennenswert, beispielsweise durch Bildung von großen nebeneinander liegenden Windungen 238 einer Wendel, quer zu einer Verbindungslinie 240 zwischen den halterseitigen Enden 58a, 58b ausdehnt, und führt zu einer gleichzeitigen Ausbildung eines gerafften Zustands der Windstop-Flächenelemente 24, die somit nicht mehr biegeschlaff durchhängen, sondern in eine durch das Querspreizelement 230 definierte geraffte Stellung übergehen.

Bei der Darstellung in Fig. 17 ist eine Ausdehnung des Querspreizelements 230 im wesentlichen auf einer Seite der Verbindungslinie 240 dargestellt, es ist aber genauso möglich, das Querspreizelement so auszubilden, daß es sich im wesentlichen auf mehreren Seiten der Verbindungslinie 240 quer zu dieser ausdehnt.

Ferner unterstützt das Kontraktionselement 232 die Ausbildung des gerafften Zustandes der Windstop-Flächenelemente 24 durch das Aufbringen einer Zugwirkung und das Bestreben, in der Tasche 234 so zu verlaufen, daß diese sich möglichst nahe der Verbindungslinie 240 erstreckt.

Durch die Ausdehnung des Querspreizelements 230 in Richtung quer zur Verbindungslinie 240 und den Übergang der Windstop-Flächenelemente 24 in einen gerafften Zustand, besteht die Möglichkeit, die Windstop-Flächenelemente 24 bei Bewegung der Halter 22 von der Einsatzposition in die Verstauposition gezielt mitzunehmen und somit gleichzeitig die gesamten Windstop-Flächenelemente 24 ebenfalls in den Verstauraum zu bewegen, so daß bei Erreichen der Verstauposition der Halter 22 auch gleichzeitig die Windstop-Flächenelemente in der Verstauposition stehen.

Beim Übergang von der Einsatzposition in die Verstauposition wird dabei zunächst der Abstand zwischen den halterseitigen Enden 58a, 58b der Spannmittel 58 verringert und dann wieder bei Erreichen der Verstauposition vergrößert, so daß jeweils in der Einsatzposition als auch in der Verstauposition die Spannmittel 58 in einer gedehnten Stellung stehen. Dabei ist es nicht notwendig, daß die gedehnte Stellung der Spannmittel 58 in der Verstauposition denselben Abstand zwischen den halterseitigen Enden 58a, 58b aufweist wie in der Einsatzposition.

Vorzugsweise wird als Querspreizelement 230 ein wendelförmig gewickeltes Drahtseil oder ein wendelförmig gewickelter Draht eingesetzt, welcher im ungespannten Zustand die Wendelform aufweist und sich in einen im wesentlichen gestreckten Zustand spannen läßt, so daß die einzelnen Windungen 238 desselben im auseinandergezogenen Zustand im wesentlichen gerade gezogen sind. Dabei ist es wichtig, daß das Querspreizelement nicht aus einem Material hergestellt ist, welches im nicht gespannten Zustand biegeschlaff durchhängt, sondern in eine definierte Form übergeht, jedoch eine ausreichende Formflexibilität aufweist, um in einen im wesentlichen gestreckten Zustand übergehen zu können.

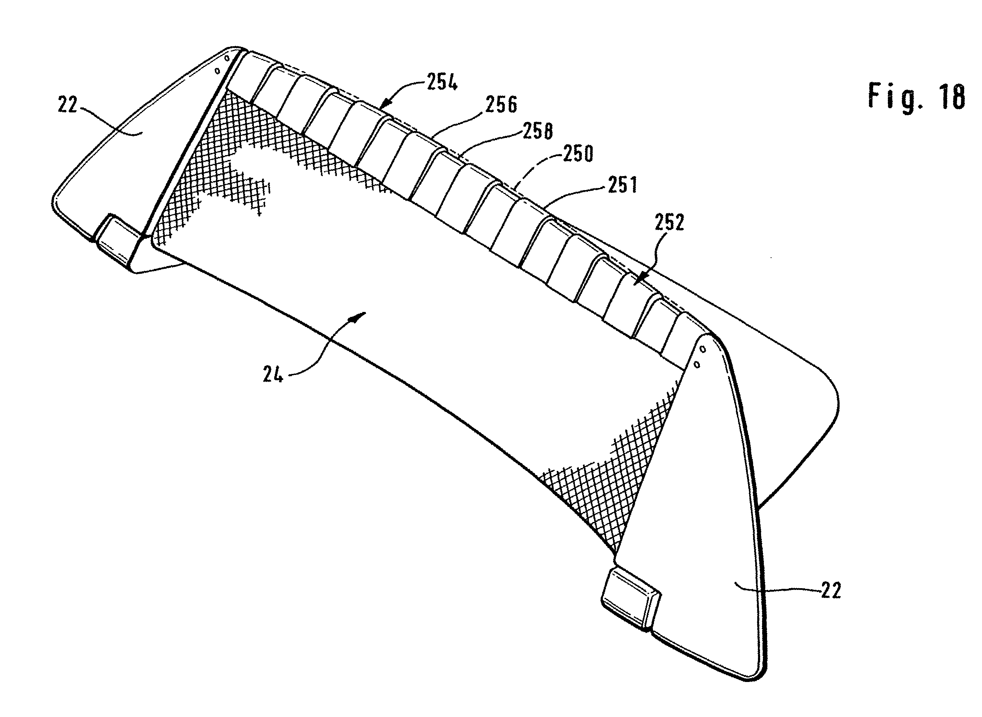

Bei einem weiteren Ausführungsbeispiel einer erfindungsgemäßen Windstop-Einrichtung, dargestellt in den Fig. 18 bis 20, sind zur Bildung einer definierten Oberlinie 250, vorzugsweise mit einer nach oben gewölbten konvexen Kontur, die Windstop-Flächenelemente 24 mit einem Kamm 252 versehen, welcher aus einem Material mit einer gewissen Eigensteifigkeit hergestellt ist, so daß der Kamm 252 in der Einsatzposition der Halter 22 ebenfalls in seiner Einsatzposition steht und die gewünschte konvex nach oben gewölbte Oberlinie 250 der Windstop-Flächenelemente 24 durch seine Oberkante 251 bildet.

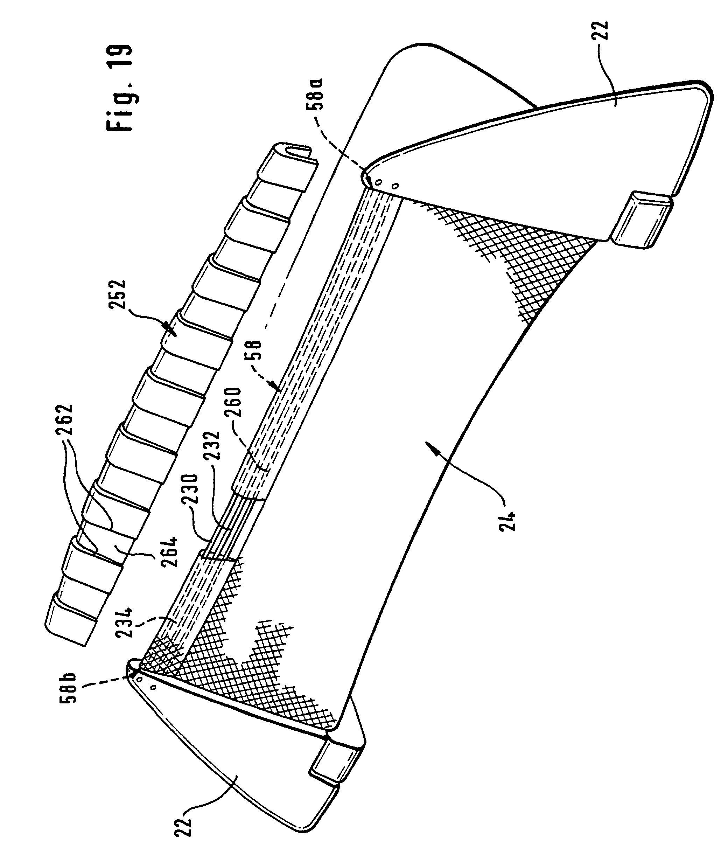

Ferner ist die Oberkante noch mit einer zusätzlichen Zahnung 254, umfassend nach oben vorspringende Bereiche 256 und gegenüber diesen zurückspringende Bereiche 258, versehen, welche dazu dient, die Bildung von Windgeräuschen zu verhindern oder abzumildern. Der Kamm 252 ist beispielsweise aus Gummimaterial hergestellt und übergreift oder bildet, wie in der Explosionsdarstellung in Fig. 19 erkennbar, die an die Windstop-Flächenelemente 24 angeformte Tasche 234, in welcher die Spannmittel 58 verlaufen.

Die Spannmittel 58 umfassen in diesem Fall ebenfalls das Querspreizelement 230, das Kontraktionselement 232 und noch ein zusätzliches Ausrichtelement 260, welches im Abstand von dem Querspreizelement 230 angeordnet ist und somit gemeinsam mit dem Querspreizelement 230 für eine definierte Ausrichtung des Kamms 252 sorgt, so daß dieser in der Einsatzposition der Halter 22 kippfrei gehalten ist.

Dabei ist das Ausrichtelement 260 ebenfalls so ausgebildet, daß es in der Einsatzposition zwischen den Haltern 22 gespannt ist. Das Ausrichtelement 260 kann dabei entweder aus einem biegeschlaffen Material sein oder ebenfalls aus einem Material mit einer Eigensteifigkeit, welches analog dem Querspreizelement in eine definierte Form übergeht, wenn sich der Abstand zwischen den halterseitigen Enden 58a, b der Spannmittel 58 verringert. Eine weitere Möglichkeit zur Realisierung des Ausrichtelements 260 ist die, dieses als Kontraktionselement entsprechend dem Kontraktionselement 232 auszubilden.

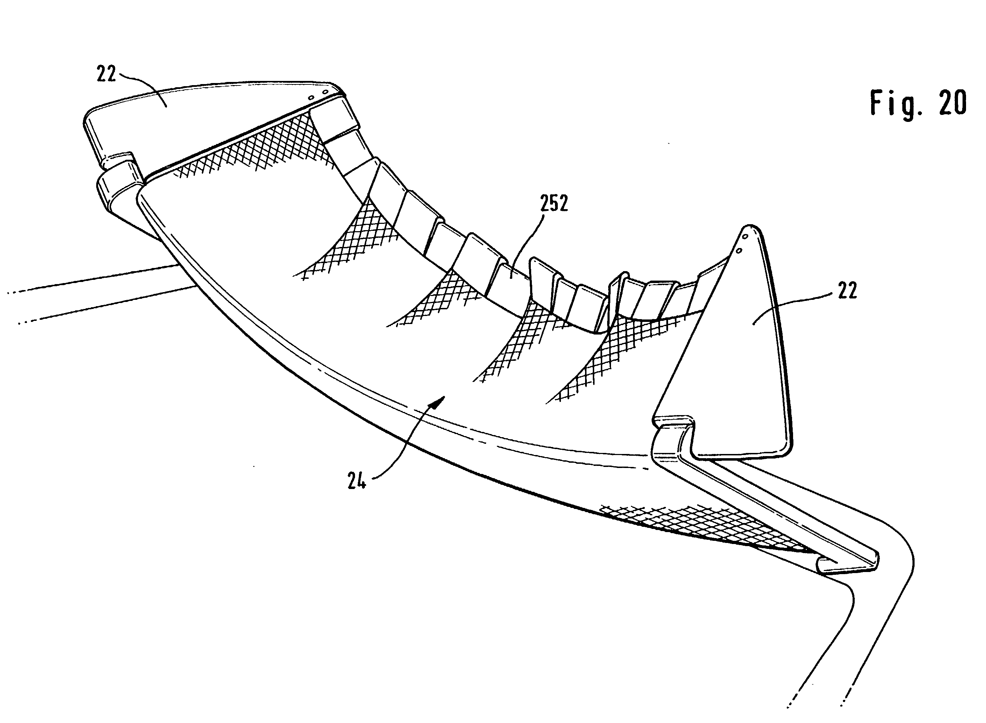

Ferner ist der Kamm 252 um die vom Querspreizelement 230 vorgegebenen Formänderung bei Verringerung des Abstands zwischen den halterseitigen Enden 58a, b, mitmachen zu können, mit Biegestellen 262, beispielsweise mit Stellen geringerer Materialdicke, versehen, die in regelmäßigen Abständen längs der Erstreckung des Kamms 252 zwischen den Haltern 22 angeordnet sind, so daß an diesen Biegestellen 262 die Möglichkeit eines Abbiegens des Kamms 252 gegeben ist und somit, wie in Fig. 20 dargestellt, der Kamm 252 der von dem Querspreizelement 230 vorgegebenen Formänderung folgen kann, wenn sich der Abstand zwischen den Haltern 22 beim Übergang von der Einsatzposition in die Verstauposition verringert. Damit kann trotz des Kamms 252 das Querspreizelement 230 dieselbe Wirkung hinsichtlich der Mitnahme der Windstop-Flächenelemente 24 entfalten, wie dies voranstehend im Zusammenhang mit dem neunten Ausführungsbeispiel (Fig. 15 bis 17) beschrieben wurde.

Vorzugsweise ist der Kamm 252 so ausgebildet, daß zwischen den Biegestellen 262 die einzelnen Abschnitte 264 des Kamms 252 eine relativ große Formsteifigkeit aufweisen und somit im wesentlichen trotz Einwirkung des Querspreizelements 230 ihre Form beibehalten.

## Patentansprüche

1. Windstop-Einrichtung für ein Cabriofahrzeug, umfassend Windstop-Flächenelemente (24), welche in einem Bereich hinter Vordersitzen des Cabriofahrzeugs positionierbar sind, Halter (22) zum Halten der Windstop-Flächenelemente in ihrer wirksamen Stellung, welche am Cabriofahrzeug montierbar sind, wobei die Halter (22) relativ zum Cabriofahrzeug (12) derart gelagert sind, daß in einer Einsatzposition (46) der Halter (22) die Windstop-Flächenelemente (24) in der wirksamen Stellung stehen und in einer Verstauposition (36) die Halter (22) mit den Windstop-Flächenelementen (24) in einem im Cabriofahrzeug (12) angeordneten Verstauraum (20) verstaut sind, .
**dadurch gekennzeichnet, daß** Schwenkachsen (38, 42) der Halter (22) jeweils schräg zu der Fahrzeuglängsrichtung (X) und schräg zur Fahrzeugquerrichtung (Y) orientiert sind.

2. Windstop-Einrichtung nach Anspruch 1, **dadurch gekennzeichnet, daß** die Halter (22) sich in der Verstauposition (36) quer zu einer Fahrzeuglängsrichtung (X) erstrecken.

3. Windstop-Einrichtung nach Anspruch 1 oder 2, **dadurch gekennzeichnet, daß** die Halter (22) relativ zum Verstauraum (20) schwenkbar sind.

4. Windstop-Einrichtung nach einem der voranstehenden Ansprüche,
**dadurch gekennzeichnet, daß** die Schwenkachsen (38, 42) jeweils schräg zu einer vertikalen Richtung (Z) orientiert sind.

5. Windstop-Einrichtung nach einem der voranstehenden Ansprüche,
**dadurch gekennzeichnet, daß** Schwenkachsen (38, 42) für die Halter (22) schräg zu einer durch eine Fahrzeuglängsrichtung (X) und einer Fahrzeugquerrichtung (Y) aufgespannten Ebene (X-Y-Ebene) orientiert sind.

6. Windstop-Einrichtung nach Anspruch 5, **dadurch gekennzeichnet, daß** ein Schwenkachsenvektor der Schwenkachsen (38, 42), dessen Projektion auf die vertikale Richtung (Z) parallel zu dieser ist, in Richtung eines Fahrzeuginnenraums bezogen auf die Fahrzeugquerrichtung und in Richtung eines hinteren Fahrzeugendes bezogen auf die Fahrzeuglängsrichtung (X) orientiert ist.

7. Windstop-Einrichtung nach einem der Ansprüche 3 bis 6, **dadurch gekennzeichnet, daß** die Windstop-Einrichtung Schwenklager (26) zur Lagerung der Halter (22) umfaßt, welche an dem Cabriofahrzeug (12) innerhalb des Verstauraumes (20) montiert sind.

8. Windstop-Einrichtung nach einem der Ansprüche 3 bis 7, **dadurch gekennzeichnet, daß** die Windstop-Einrichtung einen ersten äußeren Schwenkhalter (30), welcher in einem ersten Schwenklager (39) gelagert ist, und einen zweiten äußeren Schwenkhalter (34), welcher in einem zweiten Schwenklager (40) gelagert ist, umfaßt, wobei jeweilige Verlängerungslinien einer ersten Schwenkachse (38) des ersten äußeren Halters (30) und einer zweiten Schwenkachse (42) des zweiten äußeren Halters (34) einen Schnittpunkt aufweisen.

9. Windstop-Einrichtung nach Anspruch 8, **dadurch gekennzeichnet, daß** der Schnittpunkt innerhalb einer Mittenebene (54) des Cabriofahrzeuges (12), welche senkrecht zur Fahrzeugquerrichtung (Y) ist, liegt.

10. Windstop-Einrichtung nach Anspruch 8, **dadurch gekennzeichnet, daß** der Schnittpunkt gegenüber einer Mittenebene (54) des Cabriofahrzeuges (12), welche senkrecht zur Fahrzeugquerrichtung (Y) ist, versetzt ist.

11. Windstop-Einrichtung nach einem der voranstehenden Ansprüche, **dadurch gekennzeichnet, daß** jeder Halter (22) ein Windschott-Haltebügelelement (50) und ein Abdeckungs-Haltebügelelement (52) aufweist.

12. Windstop-Einrichtung nach Anspruch 11, **dadurch gekennzeichnet, daß** das Windschott-Haltebügelelement (50) relativ zum Abdeckungs-Haltebügelelement (52) von einer aktiven Stellung in eine inaktive Stellung und umgekehrt bewegbar ist.

13. Windstop-Einrichtung nach Anspruch 12, **dadurch gekennzeichnet, daß** das Windschott-Haltebügelelement (50) in der aktiven Stellung in seiner die Windstop-Flächenelemente (24) in der wirksamen Stellung haltenden Stellung steht und in der inaktiven Stellung in einer nahe dem Abdeckungs-Haltebügelelement (52) liegenden Stellung.

14. Windstop-Einrichtung nach Anspruch 13, **dadurch gekennzeichnet, daß** das Windschott-Haltebügelelement (50) in seiner inaktiven Stellung ungefähr parallel zum Abdeckungs-Haltebügelelement ausgerichtet ist.

15. Windstop-Einrichtung nach einem der Ansprüche 12 bis 14, **dadurch gekennzeichnet, daß** das Windschott-Haltebügelelement (50) in der Einsatzposition der Halter (30, 34) in der aktiven Stellung steht und in der Verstauposition der Halter (30, 34) in der inaktiven Stellung.

16. Windstop-Einrichtung nach Anspruch 15, **dadurch gekennzeichnet, daß** das Windschott-Haltebügelelement (50) mit der Bewegung der Halter (22) von der Verstauposition in die Einsatzposition koordiniert von der inaktiven Stellung in die aktive Stellung bewegbar ist.

17. Windstop-Einrichtung nach Anspruch 16, **dadurch gekennzeichnet, daß** das Windschott-Haltebügelelement (50) während der Bewegung der Halter (22) von der Verstauposition in die Einsatzposition von der inaktiven Stellung in die aktive Stellung bewegbar ist.

18. Windstop-Einrichtung nach Anspruch 16 oder 17, **dadurch gekennzeichnet, daß** das Windschott-Haltebügelelement (50) zwangsgesteuert mit der Bewegung der Halter (22) bewegbar ist.

19. Windstop-Einrichtung nach einem der Ansprüche 15 bis 18 **dadurch gekennzeichnet, daß** die Bewegung des Windschott-Haltebügelelements (50) mechanisch mit der Bewegung der Halter (22) gekoppelt ist.

20. Windstop-Einrichtung nach Anspruch 19, **dadurch gekennzeichnet, daß** die Bewegung des Windschott-Haltebügelelements (50) durch ein Zugelement (130) mechanisch mit der Bewegung der Halter (22) gekoppelt ist.

21. Windstop-Einrichtung nach Anspruch 20, **dadurch gekennzeichnet, daß** das Zugelement (130) einen in Zugrichtung wirksamen elastischen Kraftspeicher (150) aufweist.

22. Windstop-Einrichtung nach Anspruch 20 oder 21, **dadurch gekennzeichnet, daß** ein freier Abschnitt (142) des Zugelements (130) im entspannten Zustand in einer vorgegebenen Richtung gehalten ist.

23. Windstop-Einrichtung nach einem der Ansprüche 19 bis 22, **dadurch gekennzeichnet, daß** das Windschott-Haltebügelelement (50) durch ein elastisches Element (144) relativ zum Abdeckungs-Haltebügelelement (52) in Richtung seiner inaktiven Stellung beaufschlagt ist.

24. Windstop-Einrichtung nach Anspruch 2, **dadurch gekennzeichnet, daß** die Schwenkachsen (222) in einem kleinen spitzen Winkel zur Fahrzeuglängsrichtung (X) orientiert sind.

25. Windstop-Einrichtung nach Anspruch 24, **dadurch gekennzeichnet, daß** ein erstes Schwenklager, in welchem ein erster äußerer Querschwenkhalter (216) gelagert ist, bezogen auf eine Fahrzeuglängsrichtung (X) versetzt gegen ein zweites Schwenklager, in welchem ein zweiter äußerer Querschwenkhalter (218) gelagert ist, angeordnet ist.

26. Windstop-Einrichtung nach einem der vorangehenden Ansprüche, **dadurch gekennzeichnet, daß** die Halter (22) so ausgebildet sind, daß in der Einsatzposition (46) Windstop-Flächenelemente (24) im wesentlichen parallel zur Fahrzeugquerrichtung (Y) und in einem Winkel (α) zur durch die Fahrzeuglängsrichtung (X) und die Fahrzeugquerrichtung (Y) aufgespannte Ebene orientiert sind.

27. Windstop-Einrichtung nach Anspruch 26, **dadurch gekennzeichnet, daß** der Winkel (α) gemessen im Gegenuhrzeigersinn gegenüber der durch die Fahrzeuglängsrichtung (X) und die Fahrzeugquerrichtung (Y) aufgespannten Ebene größer oder gleich 90° und kleiner als ca. 180° ist.

28. Windstop-Einrichtung nach Anspruch 26 oder 27, **dadurch gekennzeichnet, daß** die Halter so ausgebildet sind, daß in der Einsatzposition (46) Windstop-Flächenelemente (24) von einem an einem den Vordersitzen (48) zugewandten Ende der Halter (22) liegenden Bereich bis zu einem Bereich des Verstauraums (20) angeordnet sind.

29. Windstop-Einrichtung nach einem der vorangehenden Ansprüche, **dadurch gekennzeichnet, daß** das Material für die Windstop-Flächenelemente (24) ein faltbares Material ist.

30. Windstop-Einrichtung nach einem der vorangehenden Ansprüche, **dadurch gekennzeichnet, daß** das Material für die Windstop-Flächenelemente (24) eine bedingte Winddurchlässigkeit aufweist.

31. Windstop-Einrichtung nach Anspruch 30, **dadurch gekennzeichnet, daß** das Material für die Windstop-Flächenelemente (24) eine Netzstruktur aufweist.

32. Windstop-Einrichtung nach einem der Ansprüche 29 bis 31, **dadurch gekennzeichnet, daß** die Windstop-Einrichtung Spannmittel (58) aufweist, welche ein Aufspannen der Windstop-Flächenelemente (24) beim Bewegen der Halter (22) aus dem Verstauraum (20) in die Einsatzposition (46) bewirken.

33. Windstop-Einrichtung nach Anspruch 32, **dadurch gekennzeichnet, daß** die Spannmittel (58) ein sich bei abnehmendem Abstand zwischen dessen halterseitigen Enden (58a, b) durch Formänderung in Richtung quer zu einer Verbindungslinie (240) zwischen den halterseitigen Enden (230a, b) ausdehnendes Querspreizelement (230) umfassen.

34. Windstop-Einrichtung nach Anspruch 33, **dadurch gekennzeichnet, daß** das Querspreizelement (230) sich durch Bildung von quer zur Verbindungslinie (240) verlaufenden Ausbiegungen (238) quer zur Verbindungslinie (240) ausdehnt.

35. Windstop-Einrichtung nach Anspruch 33 oder 34, **dadurch gekennzeichnet, daß** das Querspreizelement (230) als Ausbiegungen mehrere Bögen (238) bildet.

36. Windstop-Einrichtung nach einem der Ansprüche 33 bis 35, **dadurch gekennzeichnet, daß** das Querspreizelement (230) mäanderähnliche Bögen (238) bildet.

37. Windstop-Einrichtung nach einem der Ansprüche 33 bis 35, **dadurch gekennzeichnet, daß** das Querspreizelement (230) wendelartige Bögen (238) bildet.

38. Windstop-Einrichtung nach einem der Ansprüche 33 bis 37, **dadurch gekennzeichnet, daß** das Querspreizelement (230) aus einem formflexiblen, nichtschlaffen Material ist.

39. Windstop-Einrichtung nach einem der Ansprüche 33 bis 38, **dadurch gekennzeichnet, daß** das Querspreizelement (230) aus einem Strangmaterial ist, welches von einer quer zur Verbindungslinie (240) der Enden (230a, b) ausgedehnten Form durch Vergrößern des Abstands der Enden (230a, b) in eine gestreckte Form mit quer zur Verbindungslinie (240) reduzierten Ausdehnung bringbar ist.

40. Windstop-Einrichtung nach einem der Ansprüche 33 bis 39, **dadurch gekennzeichnet, daß** das Spannmittel (58) in einer schlauchförmigen mit den Windstop-Flächenelementen (24) verbundenen Tasche (234) verläuft.

41. Windstop-Einrichtung nach Anspruch 40, **dadurch gekennzeichnet, daß** die Tasche (234) aus dem Material der Windstop-Flächenelemente (24) gebildet ist.

42. Windstop-Einrichtung nach Anspruch 40 oder 41, **dadurch gekennzeichnet, daß** das Spannmittel (58) lose in der Tasche (234) verläuft.

43. Windstop-Einrichtung nach einem der Ansprüche 40 bis 42, **dadurch gekennzeichnet, daß** die Tasche (234) eine zumindest begrenzte Querausdehnung des Spannmittels (58) zuläßt.

44. Windstop-Einrichtung nach einem der Ansprüche 32 bis 43, **dadurch gekennzeichnet, daß** die Spannmittel (58) ein zwischen den Haltern (22) angeordnetes flexibles Verbindungselement umfassen, welches die Windstop-Flächenelemente (24) in der Einsatzposition (46) spannt.

45. Windstop-Einrichtung nach einem der Ansprüche 33 bis 44, **dadurch gekennzeichnet, daß** die Spannmittel (58) ein in Richtung einer Verringerung des Abstands zwischen den halterseitigen Enden (58a, b) wirkendes Kontraktionselement (232) aufweisen.

46. Windstop-Einrichtung nach Anspruch 45, **dadurch gekennzeichnet, daß** das Kontraktionselement (232) ein zugelastischer Strang ist.

47. Windstop-Einrichtung nach einem der voranstehenden Ansprüche, **dadurch gekennzeichnet, daß** die Windstop-Flächenelemente (24) als oberen Abschluß einen Kamm (252) tragen.

48. Windstop-Einrichtung nach Anspruch 47, **dadurch gekennzeichnet, daß** der Kamm (252) eine konvex nach oben gewölbte Oberlinie (250) bildet.

49. Windstop-Einrichtung nach Anspruch 47 oder 48, **dadurch gekennzeichnet, daß** der Kamm (252) eine gezahnte obere Begrenzungslinie (254) aufweist.

50. Windstop-Einrichtung nach einem der Ansprüche 47 bis 49, **dadurch gekennzeichnet, daß** der Kamm (252) faltbar ist.

51. Windstop-Einrichtung nach einem der Ansprüche 47 bis 50, **dadurch gekennzeichnet, daß** der Kamm (252) aus einem nichtschlaffem Material hergestellt ist.

52. Windstop-Einrichtung nach einem der Ansprüche 47 bis 51, **dadurch gekennzeichnet, daß** der Kamm (252) durch die Spannmittel (58) ausgerichtet gehalten ist.

53. Windstop-Einrichtung nach einem der vorangehenden Ansprüche, **dadurch gekennzeichnet, daß** der Verstauraum (20) durch einen Innenraum (18) eines Kassettenelementes (14, 224) gebildet ist, welches an dem Cabriofahrzeug (12; 212) montierbar ist.

54. Windstop-Einrichtung nach Anspruch 53, **dadurch gekennzeichnet, daß** Lager (26; 220) für die Bewegung der Halter (22, 216, 218) an dem Kassettenelement (14; 224) montiert sind.

55. Windstop-Einrichtung nach einem der vorangehenden Ansprüche, **dadurch gekennzeichnet, daß** der Verstauraum (20) eine Abdeckung (60) aufweist, welche sich öffnen und schließen läßt.

56. Windstop-Einrichtung nach einem der vorangehenden Ansprüche, **dadurch gekennzeichnet, daß** der Verstauraum (20) hinter Rücksitzen (16) des Cabriofahrzeuges (12) im Cabriofahrzeug (12) angeordnet ist.

57. Windstop-Einrichtung nach einem der vorangehenden Ansprüche, **dadurch gekennzeichnet, daß** der Verstauraum in Rücksitzen des Cabriofahrzeugs (12) integriert ist.

58. Windstop-Einrichtung nach einem der Ansprüche 1 bis 55, **dadurch gekennzeichnet, daß** der Verstauraum (20) hinter den Vordersitzen (48) des Cabriofahrzeuges (212) angeordnet ist.

59. Windstop-Einrichtung nach einem der vorangehenden Ansprüche, **dadurch gekennzeichnet, daß** die Windstop-Einrichtung einen Antrieb (66; 78) zum Schwenken der Halter (22) aufweist.

60. Windstop-Einrichtung nach Anspruch 59, **dadurch gekennzeichnet, daß** ein erster äußerer Schwenkhalter (30) durch einen ersten Antrieb (66; 78) und ein zweiter äußerer Schwenkhalter (34) durch einen zweiten Antrieb (92) angetrieben sind.

61. Windstop-Einrichtung nach Anspruch 60, **dadurch gekennzeichnet, daß** der erste und der zweite Antrieb mittels einer Steuerung (67) koppelbar sind.

62. Windstop-Einrichtung nach Anspruch 60, **dadurch gekennzeichnet, daß** der erste Antrieb (78) für den einen Halter (22) und der zweite Antrieb (92) für den anderen Halter (22) mechanisch gekoppelt sind.

63. Windstop-Einrichtung nach Anspruch 62, **dadurch gekennzeichnet, daß** die mechanische Kopplung durch eine Hebelgestängevorrichtung (68) gebildet ist, welche ein Gelenkkopplungselement (70) aufweist, das drehbar mit einer fahrzeugfesten Drehachse (72) gelagert ist und wobei eine Drehbewegung dieses Gelenkkopplungselementes (70) umsetzbar ist in eine Schwenkbewegung des ersten (30) und des zweiten (34) äußeren Halters.

64. Windstop-Einrichtung nach Anspruch 63, **dadurch gekennzeichnet, daß** an das Gelenkkopplungselement (70) ein erstes Gelenkstangenelement (74) angelenkt ist, welches an ein fahrzeugfest drehbar gelagertes erste Zahnkranzelement (78) außerhalb dessen Drehachse (80) angelenkt ist, wobei durch das erste Zahnkranzelement (78) der erste Antrieb für den ersten äußeren Halter (30) gebildet ist, und daß an das Gelenkkopplungselement (70) ein zweites Gelenkstangenelement (88) angelenkt ist, welches an ein fahrzeugfest drehbar gelagertes zweites Zahnkranzelement (92) außerhalb dessen Drehachse angelenkt ist, wobei durch das zweite Zahnkranzelement (92) der zweite Antrieb für den zweiten äußeren Halter (34) gebildet ist.

65. Windstop-Einrichtung nach Anspruch 64, **dadurch gekennzeichnet, daß** das erste Gelenkstangenelement (74) bezogen auf den Abstand zwischen entsprechenden Gelenkpunkten (73, 76; 86, 90) kürzer ist als das zweite Gelenkstangenelement (88).

66. Windstop-Einrichtung nach Anspruch 64 oder 65, **dadurch gekennzeichnet, daß** in der Verstauposition (36) das erste Gelenkstangenelement (74) im wesentlichen kolinear zur Richtung zwischen Anlenkpunkten (73, 86) des ersten Gelenkstangenelements (74) und des zweiten Gelenkstangenelementes (88) an dem Gelenkkopplungselement (70) orientiert ist und das zweite Gelenkstangenelement (88) quer zu dieser Richtung orientiert ist.

67. Windstop-Einrichtung nach einem der Ansprüche 64 bis 66, **dadurch gekennzeichnet, daß** der erste (30) und der zweite (34) äußere Schwenkhalter jeweils starr mit einem fahrzeugfest drehbar angeordneten Ritzelelement (82, 94) verbunden sind, welches jeweils zur Übertragung der Drehbewegung des ersten (78) und zweiten (92) Zahnkranzelements auf die jeweiligen Schwenkhalter (30, 34) dient.

68. Windstop-Einrichtung nach Anspruch 67, **dadurch gekennzeichnet, daß** ein Abstand (d) zwischen einer Ritzelelementdrehachse (82) und zugehöriger Zahnkranzelementdrehachse (80) kleiner ist als ein Abstand (a) zwischen der Zahnkranzelementdrehachse (80) und einer Gelenkkopplungselementdrehachse (72) des Gelenkkopplungselementes (70).

69. Windstop-Einrichtung nach einem der Ansprüche 64 bis 68, **dadurch gekennzeichnet, daß** das Gelenkkopplungselement (70) mittels eines Schneckentriebs drehbar ist.

70. Windstop-Einrichtung nach einem der Ansprüche 59 bis 69, **dadurch gekennzeichnet, daß** der Antrieb (66; 78, 92) der Halter (22) von einer Fahrgastzelle des Cabriofahrzeuges (12; 212) aus betätigbar ist.

71. Windstop-Einrichtung nach einem der Ansprüche 59 bis 70, **dadurch gekennzeichnet, daß** der Antrieb (66; 78, 92) mit einem Öffnungs- und Schließmechanismus für eine Abdeckung (60) des Verstauraumes (20) gekoppelt ist.

## Claims

1. Wind stop device for a convertible vehicle, comprising wind stop surface elements (24) which are positionable in an area behind front seats of the convertible vehicle, holders (22) for holding the wind stop surface elements in their active position, which are mountable on the convertible vehicle, the holders (22) being mounted relative to the convertible vehicle (12) in such a way that in an in-use position (46) of the holders (22) the wind stop surface elements (24) are in the active position, and in a stowage position (36) the holders (22) are stowed with the wind stop surface elements (24) in a stowage space (20) arranged in the convertible vehicle (12), **characterized in that** pivot axes (38, 42) of the holders (22) are respectively oriented at an incline to the longitudinal direction of the vehicle (X) and at an incline to the transverse direction of the vehicle (Y).

2. Wind stop device in accordance with claim 1, **characterized in that** the holders (22) extend in the stowage position (36) transversely to a longitudinal direction of the vehicle (X).

3. Wind stop device in accordance with claim 1 or 2, **characterized in that** the holders (22) are pivotable relative to the stowage space (20).

4. Wind stop device in accordance with any one of the preceding claims, **characterized in that** the pivot axes (38, 42) are respectively oriented at an incline to a vertical direction (Z).

5. Wind stop device in accordance with any one of the preceding claims, **characterized in that** pivot axes (38, 42) for the holders (22) are oriented at an incline to a plane (X-Y plane) defined by a longitudinal direction of the vehicle (X) and a transverse direction of the vehicle (Y).

6. Wind stop device in accordance with claim 5, **characterized in that** a pivot axis vector of the pivot axes (38, 42), whose projection onto the vertical direction (Z) is parallel thereto, is oriented in the direction of a vehicle interior in relation to the transverse direction of the vehicle and in the direction of a rear end of the vehicle in relation to the longitudinal direction of the vehicle (X).

7. Wind stop device in accordance with any one of claims 3 to 6, **characterized in that** the wind stop device comprises pivot bearings (26) for mounting the holders (22), which are mounted on the convertible vehicle (12) inside the stowage space (20).

8. Wind stop device in accordance with any one of claims 3 to 7, **characterized in that** the wind stop device comprises a first outer pivot holder (30) mounted in a first pivot bearing (39) and a second outer pivot holder (34) mounted in a second pivot bearing (40), with respective extension lines of a first pivot axis (38) of the first outer holder (30) and of a second pivot axis (42) of the second outer holder (34) having a point of intersection.

9. Wind stop device in accordance with claim 8, **characterized in that** the point of intersection lies within a centre plane (54) of the convertible vehicle (12), which is perpendicular to the transverse direction of the vehicle (Y).

10. Wind stop device in accordance with claim 8, **characterized in that** the point of intersection is offset in relation to a centre plane (54) of the convertible vehicle (12), which is perpendicular to the transverse direction of the vehicle (Y).

11. Wind stop device in accordance with any one of the preceding claims, **characterized in that** each holder (22) comprises a holding clamp element (50) for a wind blocker and a holding clamp element (52) for a cover.

12. Wind stop device in accordance with claim 11, **characterized in that** the holding clamp element (50) for a wind blocker is movable relative to the holding clamp element (52) for a cover from an active position to an inactive position and vice versa.

13. Wind stop device in accordance with claim 12, **characterized in that** in the active position the holding clamp element (50) for a wind blocker is in its position holding the wind stop surface elements (24) in the active position, and in the inactive position is in a position located close to the holding clamp element (52) for a cover.

14. Wind stop device in accordance with claim 13, **characterized in that** the holding clamp element (50) for a wind blocker is oriented in its inactive position approximately parallel to the holding clamp element for a cover.

15. Wind stop device in accordance with any one of claims 12 to 14, **characterized in that** the holding clamp element (50) for a wind blocker is in the active position in the in-use position of the holders (30, 34) and is in the inactive position in the stowage position of the holders (30, 34).

16. Wind stop device in accordance with claim 15, **characterized in that** the holding clamp element (50) for a wind blocker is movable from the inactive position to the active position in co-ordination with the movement of the holders (22) from the stowage position to the in-use position.

17. Wind stop device in accordance with claim 16, **characterized in that** the holding clamp element (50) for a wind blocker is movable from the inactive position to the active position during the movement of the holders (22) from the stowage position to the in-use position.

18. Wind stop device in accordance with claim 16 or 17, **characterized in that** the holding clamp element (50) for a wind blocker is movable by forced control with the movement of the holders (22).

19. Wind stop device in accordance with any one of claims 15 to 18, **characterized in that** the movement of the holding clamp element (50) for a wind blocker is mechanically coupled with the movement of the holders (22).

20. Wind stop device in accordance with claim 19, **characterized in that** the movement of the holding clamp element (50) for a wind blocker is mechanically coupled with the movement of the holders (22) by a traction element (130).

21. Wind stop device in accordance with claim 20, **characterized in that** the traction element (130) comprises an elastic energy accumulator (150) active in the direction of pull.

22. Wind stop device in accordance with claim 20 or 21, **characterized in that** a free section (142) of the traction element (130) is held in the relaxed state in a predetermined direction.

23. Wind stop device in accordance with any one of claims 19 to 22, **characterized in that** the holding clamp element (50) for a wind blocker is acted upon by an elastic element (144) relative to the holding clamp element (52) for a cover in the direction of its inactive position.

24. Wind stop device in accordance with claim 2, **characterized in that** the pivot axes (222) are oriented at a small acute angle to the longitudinal direction of the vehicle (X).

25. Wind stop device in accordance with claim 24, **characterized in that** a first pivot bearing having a first outer transverse pivot holder (216) mounted therein is arranged in relation to a longitudinal direction of the vehicle (X) in offset relationship to a second pivot bearing having a second outer transverse pivot holder (218) mounted therein.

26. Wind stop device in accordance with any one of the preceding claims, **characterized in that** the holders (22) are designed such that in the in-use position (46) wind stop surface elements (24) are oriented substantially parallel to the transverse direction of the vehicle (Y) and at an angle (α) to the plane defined by the longitudinal direction of the vehicle (X) and the transverse direction of the vehicle (Y).

27. Wind stop device in accordance with claim 26, **characterized in that** the angle (α), measured in the anti-clockwise direction, in relation to the plane defined by the longitudinal direction of the vehicle (X) and the transverse direction of the vehicle (Y), is greater than or equal to 90° and less than approximately 180°.

28. Wind stop device in accordance with claim 26 or 27, **characterized in that** the holders are designed such that in the in-use position (46) wind stop surface elements (24) are arranged from an area lying at an end, facing the front seats (48), of the holders (22) to an area of the stowage space (20).

29. Wind stop device in accordance with any one of the preceding claims, **characterized in that** the material for the wind stop surface elements (24) is a foldable material.

30. Wind stop device in accordance with any one of the preceding claims, **characterized in that** the material for the wind stop surface elements (24) has a limited wind permeability.

31. Wind stop device in accordance with claim 30, **characterized in that** the material for the wind stop surface elements (24) has a net structure.

32. Wind stop device in accordance with any one of claims 29 to 31, **characterized in that** the wind stop device comprises tightening means (58) which bring about a stretching-out of the wind stop surface elements (24) when the holders (22) move from the stowage space (20) to the in-use position (46).

33. Wind stop device in accordance with claim 32, **characterized in that** the tightening means (58) comprise a transverse spreading element (230) which expands, as the spacing between its ends (58a, b) at the holder side decreases, due to a change in shape in the direction transverse to a connecting line (240) between the ends (230a, b) at the holder side.

34. Wind stop device in accordance with claim 33, **characterized in that** the transverse spreading element (230) expands transversely to the connecting line (240) by the formation of outward bends (238) extending transversely to the connecting line (240).

35. Wind stop device in accordance with claim 33 or 34, **characterized in that** the transverse spreading element (230) forms several curves (238) as outward bends.

36. Wind stop device in accordance with any one of claims 33 to 35, **characterized in that** the transverse spreading element (230) forms meander-like curves (238).

37. Wind stop device in accordance with any one of claims 33 to 35, **characterized in that** the transverse spreading element (230) forms spiral-type curves (238).

38. Wind stop device in accordance with any one of claims 33 to 37, **characterized in that** the transverse spreading element (230) is made of a material which is flexible with respect to shape and is not limp.

39. Wind stop device in accordance with any one of claims 33 to 38, **characterized in that** the transverse spreading element (230) is made of a strand material which can be brought from a shape extending transversely to the connecting line (240) of the ends (230a, b) by enlargement of the spacing of the ends (230a, b) into a stretched shape with an extent reduced transversely to the connecting line (240).

40. Wind stop device in accordance with any one of claims 33 to 39, **characterized in that** the tightening means (58) extends in a tube-shaped pocket (234) connected to the wind stop surface elements (24).

41. Wind stop device in accordance with claim 40, **characterized in that** the pocket (234) is made of the material of the wind stop surface elements (24).

42. Wind stop device in accordance with claim 40 or 41, **characterized in that** the tightening means (58) extends loosely in the pocket (234).

43. Wind stop device in accordance with any one of claims 40 to 42, **characterized in that** the pocket (234) allows an at least limited transverse extension of the tightening means (58).

44. Wind stop device in accordance with any one of claims 32 to 43, **characterized in that** the tightening means (58) comprise a flexible connecting element arranged between the holders (22), which tightens the wind stop surface elements (24) in the in-use position (46).

45. Wind stop device in accordance with any one of claims 33 to 44, **characterized in that** the tightening means (58) comprise a contraction element (232) acting in the direction of a decrease in the spacing between the ends (58a, b) at the holder side.

46. Wind stop device in accordance with claim 45, **characterized in that** the contraction element (232) is a strand with elasticity of extension.

47. Wind stop device in accordance with any one of the preceding claims, **characterized in that** the wind stop surface elements (24) carry a crest (252) as upper closure.

48. Wind stop device in accordance with claim 47, **characterized in that** the crest (252) forms a convexly upwardly curved upper line (250).

49. Wind stop device in accordance with claim 47 or 48, **characterized in that** the crest (252) has a toothed upper delimiting line (254).

50. Wind stop device in accordance with any one of claims 47 to 49, **characterized in that** the crest (252) is foldable.

51. Wind stop device in accordance with any one of claims 47 to 50, **characterized in that** the crest (252) is made of a material which is not limp.

52. Wind stop device in accordance with any one of claims 47 to 51, **characterized in that** the crest (252) is held in alignment by the tightening means (58).

53. Wind stop device in accordance with any one of the preceding claims, **characterized in that** the stowage space (20) is formed by an interior (18) of a cassette element (14, 224) which is mountable on the convertible vehicle (12; 212).

54. Wind stop device in accordance with claim 53, **characterized in that** bearings (26; 220) for the movement of the holders (22, 216, 218) are mounted on the cassette element (14, 224).

55. Wind stop device in accordance with any one of the preceding claims, **characterized in that** the stowage space (20) comprises a cover (60) which is openable and closable.

56. Wind stop device in accordance with any one of the preceding claims, **characterized in that** the stowage space (20) is arranged behind rear seats (16) of the convertible vehicle (12) in the convertible vehicle (12).

57. Wind stop device in accordance with any one of the preceding claims, **characterized in that** the stowage space is integrated into rear seats of the convertible vehicle (12).

58. Wind stop device in accordance with any one of claims 1 to 55, **characterized in that** the stowage space (20) is arranged behind the front seats (48) of the convertible vehicle (212).

59. Wind stop device in accordance with any one of the preceding claims, **characterized in that** the wind stop device comprises a drive (66; 78) for pivoting the holders (22).

60. Wind stop device in accordance with claim 59, **characterized in that** a first outer pivot holder (30) is driven by a first drive (66; 78) and a second outer pivot holder (34) by a second drive (92).

61. Wind stop device in accordance with claim 60, **characterized in that** the first and second drives can be coupled by means of a control (67).

62. Wind stop device in accordance with claim 60, **characterized in that** the first drive (78) for one holder (22) and the second drive (92) for the other holder (22) are mechanically coupled.

63. Wind stop device in accordance with claim 62, **characterized in that** the mechanical coupling is formed by a rod-and-lever mechanism (68) comprising a joint coupling element (70) which is rotatably mounted with an axis of rotation (72) fixed on the vehicle, and a rotational movement of this joint coupling element (70) is convertible into a pivoting movement of the first outer holder (30) and the second outer holder (34).

64. Wind stop device in accordance with claim 63, **characterized in that** a first joint rod element (74) articulated to a first gear rim element (78) mounted rotatably and fixedly on the vehicle, outside its axis of rotation (80), is articulated to the joint coupling element (70), the first drive for the first outer holder (30) being formed by the first gear rim element (78), and **in that** a second joint rod element (88) articulated to a second gear rim element (92) mounted rotatably and fixedly on the vehicle, outside its axis of rotation, is articulated to the joint coupling element (70), the second drive for the second outer holder (34) being formed by the second gear rim element (92).

65. Wind stop device in accordance with claim 64, **characterized in that** the first joint rod element (74) is shorter than the second joint rod element (88) with respect to the distance between corresponding joint points (73, 76; 86, 90).

66. Wind stop device in accordance with claim 64 or 65, **characterized in that** in the stowage position (36) the first joint rod element (74) is orientated substantially co-linearly with the direction between articulation points (73, 86) of the first joint rod element (74) and the second joint rod element (88) on the joint coupling element (70), and the second joint rod element (88) is orientated transversely to this direction.

67. Wind stop device in accordance with any one of claims 64 to 66, **characterized in that** the first outer pivot holder (30) and the second outer pivot holder (34) are each rigidly connected to a pinion element (82, 94) which is arranged rotatably and fixedly on the vehicle and respectively serves to transmit the rotational movement of the first gear rim element (78) and the second gear rim element (92) to the respective pivot holder (30, 34).

68. Wind stop device in accordance with claim 67, **characterized in that** a spacing (d) between an axis of rotation (82) of the pinion element and an associated axis of rotation (80) of the gear rim element is smaller than a spacing (a) between the axis of rotation (80) of the gear rim element and an axis of rotation (72) of the joint coupling element (70).

69. Wind stop device in accordance with any one of claims 64 to 68, **characterized in that** the joint coupling element (70) is rotatable by means of a worm drive.

70. Wind stop device in accordance with any one of claims 59 to 69, **characterized in that** the drive (66; 78, 92) of the holders (22) is actuatable from a passenger compartment of the convertible vehicle (12; 212).

71. Wind stop device in accordance with any one of claims 59 to 70, **characterized in that** the drive (66; 78, 92) is coupled with an opening and closing mechanism for a cover (60) of the stowage space (20).

## Revendications

1. Système protecteur de vent pour un véhicule cabriolet, comprenant des éléments de surface protecteurs de vent (24), qui peuvent être positionnés dans une zone derrière des sièges avant du véhicule cabriolet, des supports (22) pour le maintien des éléments de surface protecteurs de vent dans leur position active, qui peuvent être montés sur le véhicule cabriolet, les supports (22) pouvant être logés par rapport au véhicule cabriolet (12) de telle sorte que, dans une position d'utilisation (46) des supports (22), les éléments de surface protecteurs de vent (24) sont dans la position active et, dans une position de logement (36), les supports (22) sont logés avec les éléments de surface protecteurs de vent (24) dans un compartiment de logement (20) disposé dans le véhicule cabriolet (12), **caractérisé en ce que** des axes de pivotement (38, 42) des supports (22) sont orientés respectivement obliquement par rapport à la direction longitudinale du véhicule (X) et obliquement par rapport à la direction transversale du véhicule (Y).

2. Système protectuer de vent selon la revendication 1, **caractérisé en ce que** les supports (22) s'étendent dans la position de logement (36) transversalement par rapport à une direction longitudinale du véhicule (X).

3. Système protecteur de vent selon la revendication 1 ou 2, **caractérisé en ce que** les supports (22) peuvent basculer par rapport au compartiment de logement (20).

4. Système protecteur de vent selon l'une quelconque des revendications précédentes, **caractérisé en ce que** les axes de pivotement (38, 42) sont orientés respectivement obliquement par rapport à une direction (Z) verticale.

5. Système protecteur de vent selon l'une quelconque des revendications précédentes, **caractérisé en ce que** des axes de pivotement (38, 42) pour les supports (22) sont orientés obliquement par rapport à un plan (plan X-Y) tendu par une direction longitudinale du véhicule (X) et une direction transversale du véhicule (Y).

6. Système protecteur de vent selon la revendication 5, **caractérisé en ce qu'**un vecteur d'axe de pivotement des axes de pivotement (38, 42), dont la projection sur la direction (Z) verticale est parallèle à celle-ci, est orienté en direction d'un habitacle de véhicule par rapport à la direction transversale du véhicule et en direction d'une extrémité arrière du véhicule par rapport à la direction longitudinale du véhicule (X).

7. Système protecteur de vent selon l'une quelconque des revendications 3 à 6, **caractérisé en ce que** le système protecteur de vent comprend des paliers pivotants (26) pour le logement des supports (22), qui sont montés sur le véhicule cabriolet (12) à l'intérieur de l'espace de logement (20).

8. Système protecteur de vent selon l'une quelconque des revendications 3 à 7, **caractérisé en ce que** le système protecteur de vent comprend un premier support pivotant (30) extérieur, qui est logé dans un premier palier pivotant (39), et un second support pivotant (34) extérieur, qui est logé dans un second palier pivotant (40), des lignes de prolongement respectives d'un premier axe de pivotement (38) du premier support (30) extérieur et d'un second axe de pivotement (42) du second support pivotant (34) extérieur présentant un point d'intersection.

9. Système protecteur de vent selon la revendication 8, **caractérisé en ce que** le point d'intersection se situe à l'intérieur d'un plan médian (54) du véhicule cabriolet (12), qui est perpendiculaire à la direction transversale du véhicule (Y).

10. Système protecteur de vent selon la revendication 8, **caractérisé en ce que** le point d'intersection est décalé par rapport à un plan médian (54) du véhicule cabriolet (12), qui est perpendiculaire à la direction transversale du véhicule (Y).

11. Système protecteur de vent selon l'une quelconque des revendications précédentes, **caractérisé en ce que** chaque support (22) présente un élément de bride de retenue pour cloison coupe-vent (50) et un élément de bride de retenue de revêtement (52).

12. Système protecteur de vent selon la revendication 11, **caractérisé en ce que** l'élément de bride de retenue pour cloison coupe-vent (50) peut être déplacé par rapport à l'élément de bride de retenue de revêtement (52) d'une position active à une position inactive et inversement.

13. Système protecteur de vent selon la revendication 12, **caractérisé en ce que** l'élément de bride de retenue pour cloison coupe-vent (50) est dans la position active dans sa position retenant les éléments de surface protecteurs de vent (24) dans la position active et dans la position inactive dans une position située à proximité de l'élément de bride de retenue de revêtement (52).

14. Système protecteur de vent selon la revendication 13, **caractérisé en ce que** l'élément de bride de retenue pour cloison coupe-vent (50) est orienté dans sa position inactive à peu près parallèlement à l'élément de bride de retenue de revêtement.

15. Système protecteur de vent selon l'une quelconque des revendications 12 à 14, **caractérisé en ce que** l'élément de bride de retenue pour cloison coupe-vent (50) est dans la position active dans la position d'utilisation des supports (30, 34) et dans la position inactive dans la position de logement des supports (30, 34).

16. Système protecteur de vent selon la revendication 15, **caractérisé en ce que** l'élément de bride de retenue pour cloison coupe-vent (50) peut être déplacé, avec le déplacement des supports (22) de la position de logement à la position d'utilisation, de façon coordonnée de la position inactive à la position active.

17. Système protecteur de vent selon la revendication 16, **caractérisé en ce que** l'élément de bride de retenue pour cloison coupe-vent (50) peut être déplacé, pendant le déplacement des supports (22) de la position de logement à la position d'utilisation, de la position inactive à la position active.

18. Système protecteur de vent selon la revendication 16 ou 17, **caractérisé en ce que** l'élément de bride de retenue pour cloison coupe-vent (50) peut être déplacé par commande forcée avec le déplacement des supports (22).

19. Système protecteur de vent selon l'une quelconque des revendications 15 à 18, **caractérisé en ce que** le déplacement de l'élément de bride de retenue pour cloison coupe-vent (50) est couplé de façon mécanique avec le déplacement des supports (22).

20. Système protecteur de vent selon la revendication 19, **caractérisé en ce que** le déplacement de l'élément de bride de retenue pour cloison coupe-vent (50) est couplé par un élément de traction (130) mécaniquement avec le déplacement des supports (22).

21. Système protecteur de vent selon la revendication 20, **caractérisé en ce que** l'élément de traction (130) présente un accumulateur de force (150) élastique efficace dans le sens de traction.

22. Système protecteur de vent selon la revendication 20 ou 21, **caractérisé en ce qu'**une partie (142) libre de l'élément de traction (130) est maintenue dans l'état détendu dans une direction prédéfinie.

23. Système protecteur de vent selon l'une quelconque des revendications 19 à 22, **caractérisé en ce que** l'élément de bride de retenue pour cloison coupe-vent (50) est sollicité par un élément (144) élastique par rapport à l'élément de bride de retenue de revêtement (52) en direction de sa position inactive.

24. Système protecteur de vent selon la revendication 2, **caractérisé en ce que** les axes de pivotement (222) sont orientés dans un petit angle aigu par rapport à la direction longitudinale du véhicule (X).

25. Système protecteur de vent selon la revendication 24, **caractérisé en ce qu'**un premier palier pivotant, dans lequel est logé un premier support extérieur de basculement transversal (216), est disposé de façon décalée par rapport à une direction longitudinale du véhicule (X) vers un second palier pivotant, dans lequel est logé un second support extérieur de basculement transversal (218).

26. Système protecteur de vent selon l'une quelconque des revendications précédentes, **caractérisé en ce que** les supports (22) sont conçus de telle sorte que, dans la position d'utilisation (46), des éléments de surface protecteurs de vent (24) sont orientés sensiblement parallèlement à la direction transversale du véhicule (Y) et dans un angle (α) par rapport au plan tendu par la direction longitudinale du véhicule (X) et la direction transversale du véhicule (Y).

27. Système protecteur de vent selon la revendication 26, **caractérisé en ce que** l'angle (α), mesuré dans le sens contraire à celui des aiguilles d'une montre, par rapport au plan tendu par la direction longitudinale (X) et la direction transversale du véhicule (Y) est supérieur ou égal à 90° et inférieur à environ 180°.

28. Système protecteur de vent selon la revendication 26 ou 27, **caractérisé en ce que** les supports sont conçus de telle sorte que, dans la position d'utilisation (46), des éléments de surface protecteurs de vent (24) sont disposés d'une zone située sur une extrémité, tournée vers les sièges avant (48), des supports (22) jusqu'à une zone de l'espace de logement (20).

29. Système protecteur de vent selon l'une quelconque des revendications précédentes, **caractérisé en ce que** le matériau pour les éléments de surface protecteurs de vent (24) est un matériau pliable.

30. Système protecteur de vent selon l'une quelconque des revendications, **caractérisé en ce que** le matériau pour les éléments de surface protecteurs de vent (24) présente une perméabilité au vent conditionnée.

31. Système protecteur de vent selon la revendication 30, **caractérisé en ce que** le matériau pour les éléments de surface protecteurs de vent (24) présente une structure de réseau.

32. Système protecteur de vent selon l'une quelconque des revendications 29 à 31, **caractérisé en ce que** le système protecteur de vent présente des moyens de serrage (58), qui entraînent un serrage des éléments de surface protecteurs de vent (24) lors du déplacement des supports (22) de l'espace de logement (20) à la position d'utilisation (46).

33. Système protecteur de vent selon la revendication 32, **caractérisé en ce que** les moyens de serrage (58) comprennent un élément d'écartement transversal (230) qui se détend, lors de la réduction de l'espacement entre ses extrémités (58a, b) côté support par une déformation dans la direction transversale à une ligne de liaison (240), entre les extrémités (230a, b) côté support.

34. Système protecteur de vent selon la revendication 33, **caractérisé en ce que** l'élément d'écartement transversal (230) se détend transversalement à la ligne de liaison (240) par la formation de courbures (238) agencées transversalement à la ligne de liaison (240).

35. Système protecteur de vent selon la revendication 33 ou 34, **caractérisé en ce que** l'élément d'écartement transversal (230) forme plusieurs coudes (238) sous la forme de courbures.

36. Système protecteur de vent selon l'une quelconque des revendications 33 à 35, **caractérisé en ce que** l'élément d'écartement transversal (230) forme des coudes (238) semblables à des méandres.

37. Système protecteur de vent selon l'une quelconque des revendications 33 à 35, **caractérisé en ce que** l'élément d'écartement transversal (230) forme des coudes (238) de forme hélicoïdale.

38. Système protecteur de vent selon l'une quelconque des revendications 33 à 37, **caractérisé en ce que** l'élément d'écartement transversal (230) est à base d'un matériau flexible au niveau de la forme et non flasque.

39. Système protecteur de vent selon l'une quelconque des revendications 33 à 38, **caractérisé en ce que** l'élément d'écartement transversal (230) est à base d'un matériau en barre, qui peut être amené d'une forme étendue transversalement à la ligne de liaison (240) des extrémités (230a, b), par agrandissement de l'espacement des extrémités (230a, b), dans une forme étirée avec une extension réduite transversalement à la ligne de liaison (240).

40. Système protecteur de vent selon l'une quelconque des revendications 33 à 39, **caractérisé en ce que** le moyen de serrage (58) est agencé dans une poche (234) en forme de flexible et reliée à des éléments de surface protecteurs de vent (24).

41. Système protecteur de vent selon la revendication 40, **caractérisé en ce que** la poche (234) est à base du matériau des éléments de surface protecteurs de vent (24).

42. Système protecteur de vent selon la revendication 40 ou 41, **caractérisé en ce que** le moyen de serrage (58) est agencé de façon lâche dans la poche (234).

43. Système protecteur de vent selon l'une quelconque des revendications 40 à 42, **caractérisé en ce que** la poche (234) autorise une extension transversale au moins limitée du moyen de serrage (58).

44. Système protecteur de vent selon l'une quelconque des revendications 32 à 43, **caractérisé en ce que** les moyens de serrage (58) comprennent un élément de liaison flexible et disposé entre les supports (22), qui tend les éléments de surface protecteurs de vent (24) dans la position d'utilisation (46).

45. Système protecteur de vent selon l'une quelconque des revendications 33 à 44, **caractérisé en ce que** les moyens de serrage (58) présentent un élément de contraction (232) agissant dans le sens d'une réduction de l'espacement entre les extrémités (58a, b) côté support.

46. Système protecteur de vent selon la revendication 45, **caractérisé en ce que** l'élément de contraction (232) est une barre élastique en traction.

47. Système protecteur de vent selon l'une quelconque des revendications précédentes, **caractérisé en ce que** les éléments de surface protecteurs de vent (24) portent un peigne (252) comme fermeture supérieure.

48. Système protecteur de vent selon la revendication 47, **caractérisé en ce que** le peigne (252) forme une ligne supérieure (250) incurvée de façon convexe vers le haut.

49. Système protecteur de vent selon la revendication 47 ou 48, **caractérisé en ce que** le peigne (252) présente une ligne de délimitation (254) supérieure dentelée.

50. Système protecteur de vent selon l'une quelconque des revendications 47 à 49, **caractérisé en ce que** le peigne (252) est pliable.

51. Système protecteur de vent selon l'une quelconque des revendications 47 à 50, **caractérisé en ce que** le peigne (252) est fabriqué à base d'un matériau non flasque.

52. Système protecteur de vent selon l'une quelconque des revendications 47 à 51, **caractérisé en ce que** le peigne (252) est maintenu orienté par les moyens de serrage (58).

53. Système protecteur de vent selon l'une quelconque des revendications précédentes, **caractérisé en ce que** le compartiment de logement (20) est formé par un espace intérieur (18) d'un élément de cassette (14, 224), lequel peut être monté sur un véhicule cabriolet (12 ; 212).

54. Système protecteur de vent selon la revendication 53, **caractérisé en ce que** des paliers (26, 220) pour le déplacement des supports (22, 216, 218) sont montés sur l'élément de cassette (14, 224).

55. Système protecteur de vent selon l'une quelconque des revendications précédentes, **caractérisé en ce que** le compartiment de logement (20) présente un revêtement (60) qui peut être ouvert et fermé.

56. Système protecteur de vent selon l'une quelconque des revendications précédentes, **caractérisé en ce que** le compartiment de logement (20) est disposé derrière des sièges arrière (16) du véhicule cabriolet (12) dans le véhicule cabriolet (12).

57. Système protecteur de vent selon l'une quelconque des revendications précédentes, **caractérisé en ce que** le compartiment de logement est intégré dans des sièges arrière du véhicule cabriolet (12).

58. Système protecteur de vent selon l'une quelconque des revendications 1 à 55, **caractérisé en ce que** le compartiment de logement est disposé derrière les sièges avant (48) du véhicule cabriolet (212).

59. Système protecteur de vent selon l'une quelconque des revendications précédentes, **caractérisé en ce que** le système protecteur de vent présente un entraînement (66 ; 78) pour le basculement des supports (22).

60. Système protecteur de vent selon la revendication 59, **caractérisé en ce qu'**un premier support pivotant (30) extérieur et un second support pivotant (34) extérieur sont entraînés respectivement par un premier entraînement (66 ; 78) et par un second entraînement (92).

61. Système protecteur de vent selon la revendication 60, **caractérisé en ce que** le premier et le second entraînements peuvent être couplés au moyen d'une commande (67).

62. Système protecteur de vent selon la revendication 60, **caractérisé en ce que** le premier entraînement (78) pour un support (22) et le second entraînement (92) pour l'autre support (22) sont couplés mécaniquement.

63. Système protecteur de vent selon la revendication 62, **caractérisé en ce que** le couplage mécanique est formé par un dispositif de tringle et levier (68), qui présente un élément de couplage d'articulation (70), qui est logé de façon pivotante avec un axe de rotation (72) solidaire du véhicule, et un mouvement de rotation de cet élément de couplage d'articulation (70) pouvant être converti en un mouvement de pivotement du premier (30) et du second (34) supports extérieurs.

64. Système protecteur de vent selon la revendication 63, **caractérisé en ce que** sur l'élément du couplage d'articulation (70) est articulé un premier élément de tige articulée (74), qui est articulé sur un premier élément de couronne dentée (78) logé de façon rotative et solidaire du véhicule à l'extérieur de son axe de rotation (80), le premier entraînement pour le premier support (30) extérieur étant formé par le premier élément de couronne crantée (78), et **en ce que** sur l'élément de couplage d'articulation (70) est articulé un second élément de tige articulée (88), qui est articulé sur un second élément de couronne dentée (92), logé de façon pivotante et solidaire du véhicule, à l'extérieur de son axe de rotation, le second entraînement pour le second support (34) extérieur étant formé par le second élément de couronne dentée (92).

65. Système protecteur de vent selon la revendication 64, **caractérisé en ce que** le premier élément de tige articulée (74) est plus court que le second élément de tige articulé (88) par rapport à la distance entre des points d'articulation (73, 76 ; 86, 90) correspondants.

66. Système protecteur de vent selon la revendication 64 ou 65, **caractérisé en ce que**, dans la position de logement (36), le premier élément de tige articulée (74) est orienté sensiblement de façon colinéaire par rapport à la direction entre des points d'articulation (73, 86) du premier élément de tige articulée (74) et du second élément de tige articulée (88) sur l'élément de couplage d'articulation (70) et le second élément de tige articulée (88) est orienté transversalement à cette direction.

67. Système protecteur de vent selon l'une quelconque 64 à 66, **caractérisé en ce que** le premier (30) et le second (34) supports pivotants extérieurs sont reliés respectivement de façon rigide à un élément de pignon (82, 94) disposé de façon rotative et solidaire du véhicule, lequel sert respectivement. à la transmission du mouvement de rotation du premier (78) et du second (92) éléments de couronne dentée aux supports basculants (30, 34) respectifs.

68. Système protecteur de vent selon la revendication 67, **caractérisé en ce qu'**un espacement (d) entre un axe de rotation de l'élément de pignon (82) et un axe de rotation correspondant d'élément de couronne dentée (80) est inférieur à un espacement (a) entre l'axe de rotation d'élément de couronne crantée (80) et un axe de rotation d'élément de couplage d'articulation (72) de l'élément de couplage d'articulation (70).

69. Système protecteur de vent selon l'une quelconque des revendications 64 à 68, **caractérisé en ce que** l'élément de couplage d'articulation (70) peut pivoter au moyen d'une commande à vis sans fin.

70. Système protecteur de vent selon l'une quelconque des revendications 59 à 69, **caractérisé en ce que** l'entraînement (66 ; 78, 92) des supports (22) peut être actionné à partir d'une cellule d'habitacle du véhicule cabriolet (12, 212).

71. Système protecteur de vent selon l'une quelconque des revendications 59 à 70, **caractérisé en ce que** l'entraînement (66 ; 78, 92) est couplé avec un mécanisme d'ouverture et de fermeture pour un revêtement (60) du compartiment de logement (20).
